(19) Europäisches Patentamt
European Patent Office
Office européen des brevets

(11) EP 3 141 303 B1

(12) EUROPEAN PATENT SPECIFICATION

(45) Date of publication and mention of the grant of the patent:
**13.04.2022 Bulletin 2022/15**

(21) Application number: **16188680.9**

(22) Date of filing: **14.09.2016**

(51) International Patent Classification (IPC):
***B01J 31/22*** *(2006.01)* ***C08G 59/68*** *(2006.01)*
***C08L 63/10*** *(2006.01)*

(52) Cooperative Patent Classification (CPC):
**B01J 31/2273; B01J 31/2208; B01J 31/2278; C08G 59/686;** B01J 2231/543; B01J 2531/821

# (54) GRUBBS-HOVEYDA TYPE CATALYST FOR METATHESIS REACTIONS IN HIGHLY REACTIVE ENVIRONMENTS

KATALYSATOR VOM TYP GRUBBS-HOVEYDA FÜR METATHESEREAKTIONEN IN HOCHREAKTIVEN UMGEBUNGEN

CATALYSEUR DU TYPE GRUBBS-HOVEYDA POUR DES RÉACTIONS DE MÉTATHÈSE DANS DES ENVIRONNEMENTS HAUTEMENT RÉACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2015 IT UB20153618**

(43) Date of publication of application:
**15.03.2017 Bulletin 2017/11**

(73) Proprietor: **Leonardo S.p.A.**
**00195 Roma (IT)**

(72) Inventors:
- **GUADAGNO, Liberata**
  **84084 Fisciano (Salerno) (IT)**
- **LONGO, Pasquale**
  **84047 Capaccio (Salerno) (IT)**
- **MARICONDA, Annaluisa**
  **84081 Baronissi (Salerno) (IT)**
- **CALABRESE, Elisa**
  **84133 Salerno (IT)**
- **RAIMONDO, Marialuigia**
  **84025 Eboli (Salerno) (IT)**
- **NADDEO, Carlo**
  **84098 Pontecagnano Faiano (Salerno) (IT)**
- **VERTUCCIO, Luigi**
  **84038 Teggiano (Salerno) (IT)**
- **RUSSO, Salvatore**
  **80010 Quarto (Napoli) (IT)**
- **IANNUZZO, Generoso**
  **83100 Avellino (IT)**

(74) Representative: **Gerbino, Angelo et al**
**Jacobacci & Partners S.p.A.**
**Corso Emilia 8**
**10152 Torino (IT)**

(56) References cited:
**EP-A1- 2 172 518**
**EP-A1- 2 873 682**
**EP-A2- 2 027 919**
**WO-A1-2009/113025**
**WO-A2-2004/007608**
**WO-A2-2014/120321**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 141 303 B1

Printed by Jouve, 75001 PARIS (FR)

## Description

The present invention relates to catalysts which must be stable in an interactive environment, such as an epoxy mixture hardened at high temperature and/or with hardeners such as aromatic primary amines, in particular catalysts for self-healing resins comprising of vessels containing healing agents.

In more detail, the latter agent, such as a blend of 5-ethylidene-2-norbornene/dicyclopentadiene (ENB/DCPD), or other healing agents, and a catalytic chemical trigger are incorporated within a cured epoxy matrix. When an approaching crack ruptures the embedded microcapsules, the healing agent is released into the crack plane through capillary action. Ring Opening Metathesis Polymerization (ROMP) of the healing agent is triggered by contact with the embedded catalyst, bonding the crack faces. The self-repair function in this self-healing system is thus based on the metathesis polymerization of olefins or olefin blends such as the ENB/DCPD blend activated by the catalyst dispersed at molecular level in the epoxy matrix. A dispersion at molecular level inside the epoxy matrix can help to strongly reduce the cost of the self-healing materials.

However, the self-healing systems containing the hitherto known ROMP catalysts do not meet the mechanical requirements for resins to be applied as primary structures by aeronautical industries.

These restrictions are due to the very high standards of aeronautic materials for primary structures. The poor mechanical performance of the developed self-healing materials is due to different factors:

i. The impossibility to use hardeners as aromatic primary amines (e.g. DDS) in combination with catalysts active in the ROMP.
ii. The impossibility to use curing cycles at high temperatures as those scheduled for aeronautic materials designed for primary structures.
iii. The impossibility to use the catalyst dispersed in the form of molecular complex in chemically very reactive environments, such as fluid epoxy mixtures containing reactive epoxy rings at high temperatures.
iv. The high cost of ruthenium based catalysts which have proven to give high yield in ROMP reactions of polyolefins.

Since the discovery of well-defined Ru-alkylidene olefin metathesis catalysts (e.g., Grubbs first-generation catalyst) [see e.g. a) S. T. Nguyen, L. K. Johnson, R. H. Grubbs, J. W. Ziller, J. Am. Chem. Soc. 1992, 114, 3974 -3975; b) S. T. Nguyen, R. H. Grubbs, J. W. Ziller, J. Am. Chem. Soc. 1993, 115, 9858 -9859; c) P. Schwab, R. H. Grubbs, J. W. Ziller, J. Am. Chem. Soc. 1996, 118, 100 -110], a lot of attention was given to designing new Ru-based catalysts with improved applicability. Major achievements have been attained by replacing one phosphine in first-generation catalysts by a N-heterocyclic carbene (NHC) ligand (e.g., second-generation catalyst)[see e.g. a) T. Weskamp, W. C. Schattenmann, M. Spiegler, W. A. Hermann, Angew. Chem. 1998, 110, 2631 -2633; Angew. Chem. Int. Ed. 1998, 37, 2490 -2493; b) M. Scholl, S. Ding, C. W. Lee, R. H. Grubbs, Org. Lett. 1999, 1, 953 -956; c) T. Weskamp, F. J. Kohl, W. Hieringer, D. Gleich, W. A. Hermann, Angew. Chem. 1999, 111, 2573 -2576; Angew. Chem. Int. Ed. 1999, 38, 2416 -2419; d) J. Huang, E. D. Stevens, S. P. Nolan, J. L. Peterson, J. Am. Chem. Soc. 1999, 121, 2674 - 2678], as well as by designing catalysts containing a chelating ether moiety (e.g., Hoveyda-Grubbs second-generation catalyst) [see e.g. a) S. B. Garber, J. S. Kingsbury, B. L. Gray, A. H. Hoveyda, J. Am. Chem. Soc. 2000, 122, 8168 - 8179; b) S. Gessler, S. Randl, S. Blechert, Tetrahedron Lett. 2000, 41, 9973 - 9976]. The introduction of Ru complexes bearing an N-heterocyclic carbene (NHC) ligand has marked a turning point in the development of increasingly efficient catalysts [see e.g. a) P. H. Deshmukh, S. Blechert, Dalton Trans. 2007, 2479 - 2491; b) Y. Schrodi, R. L. Pederson, Aldrichimica Acta 2007,40,45-52; c) C. Samojlowicz, M. Bieniek, K. Grela, Chem. Rev. 2009, 109, 3708 -3742; d) G. C. Vougioukalakis, R. H. Grubbs, Chem. Rev. 2010, 110, 1746 - 1787]. Successful design of NHC-Ru catalysts has been achieved by fine-tuning of the stereoelectronic properties of the NHC ligand and has led, inter alia, to a series of ruthenium catalysts bearing NHCs with varying degrees of N-heterocyclic backbone and/or aryl side chain substitution. To further improve catalyst activity, stability, and selectivity, and to consequently extend the scope of olefin metathesis, intensive research efforts have been directed toward the modification of the NHC ligand [see e.g. a) T. Savoie, B. Stenne, S. K. Collins, Adv. Synth. Catal. 2009, 351, 1826 -1832; b) L. Vieille-Petit, X. Luan, M. Gatti, S. Blumentritt, A. Linden, H. Clavier, S. P. Nolan, R. Dorta, Chem. Com-mun. 2009,3783 - 3785; c) S. Tiede, A. Berger, D. Schlesiger, D. Rost, A. L_hl, S. Blechert, Angew. Chem. 2010, 122, 4064 - 4067; Angew. Chem. Int. Ed. 2010, 49, 3972 - 3975; d) B. K. Keitz, R. H. Grubbs, Organometallics 2010, 29, 403 -408; e) L. Vieille-Petit, H. Clavier, A. Linden, S. Blumentritt, S. P. Nolan, R. Dorta, Organometallics 2010, 29, 775 -788].

WO 2014/120 321 A1 discloses a new type of hybrid high-strength carbon-fiber/epoxy composites reinforced with ultrathin toughening and self-healing core-shell fibers at interfaces by means of wetted lay-up, followed by vacuum-assisted resin transfer molding (VARTM) technique. The core-shell fibers loaded with liquid healing agent , which is a liquid monomer at room temperature, are produced by co- electrospinning, in which a plastic polymer solution dissolved in an organic solvent is used as the exterior jet and the monomer solution dissolved in the same organic solvent is used as the interior jet.

WO 2004/007 608 A1 discloses a self-healing polymer composition containing a polymer media and a plurality of microcapsules of flowable polymerizable material dispersed in the polymer media, where the microcapsules of flowable polymerizable material contain a flowable polymerizable material and have an outer surface upon which at least one polymerization agent is attached. The microcapsules are effective for rupturing with a failure of the polymeric media, and the flowable polymerizable material reacts with the polymerization agent when the polymerizable material makes contact with the polymerization agent upon rupture of the microcapsules.

EP 2 027 919 A2 discloses a catalyst system comprising a metathesis catalyst containing a complex catalyst on basis of a $6^{th}$ or $8^{th}$ group metals and exhibits at least one carbene group at the metal bonded ligands, and an alkaline earth metal chloride.

EP 2 873 682 A1 discloses an epoxy resin obtainable by curing with an hardening agent an epoxy precursor formulation containing at least a tetrafunctional epoxy precursor and the reactive diluent 1,4-Butandioldiglycidylether (BDE), wherein the percentage of BDE may be in the range 5% to 40% by wt.

WO 2009/113025 A1 and EP 2 172 518 A1 disclose, as preferred embodiments, second generation Hoveyda-Grubbs (GH-II) catalysts. WO'025 further teaches the advantages of both ENB as cyclo-olefin and GH-II as catalyst. With respect to ENB, these are *inter alia* activity at much lower temperatures (vs. DCPD), as well as lower catalyst/monomer ratios being possible. Possible hardening agents are inter alia tertiary aromatic amines, primary aromatic amines are shown not to work in EP'518.

An object of the present invention is thus to overcome the limitations of the prior art catalysts, and in particular to overcome drawbacks related to the above-captioned factors i, ii, iii and allow to significantly reduce the amount of metathesis catalyst (factor iv) in the smart materials for structural applications capable to self-repair or in polyolefin/polyolefin blends also characterized by high viscosity to obtain products of metathesis for several applications.

Such object is attained by a new ruthenium-based catalyst, in particular for ring opening metathesis polymerization (ROMP), whose formula is

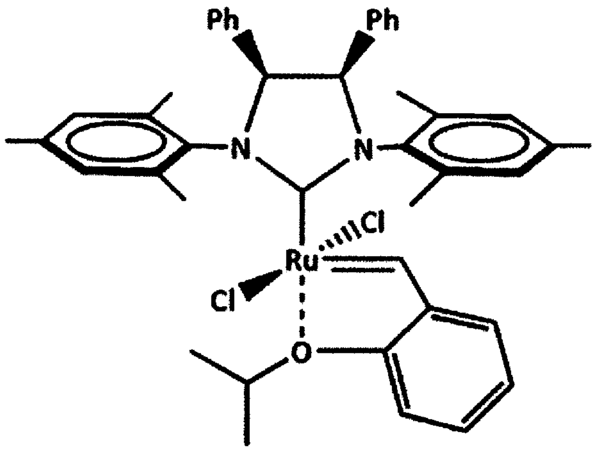

(I)

For the sake of simplicity, such catalyst is indicated in the following by the acronym $HG2_{Ph-Mes.}$

The thermal stability and chemical inertness towards the epoxy groups and aromatic primary amines of this new catalyst allow to use it dissolved in the resin in the form of molecular complex during the curing process at the temperatures required by aeronautics industry. This enables a considerable saving on the amount of catalyst to be used in the production of self-healing composite materials based on ROMP reactions.

Various possibilities of use of the catalyst of the invention are contemplated in claims 2 to 13 which follow. As a matter of fact, any chemical process providing for an olefin metathesis reaction may use such catalyst.

The synthesis of the catalyst of the invention may be effected through the following exem-plificative three-step process:

## First step

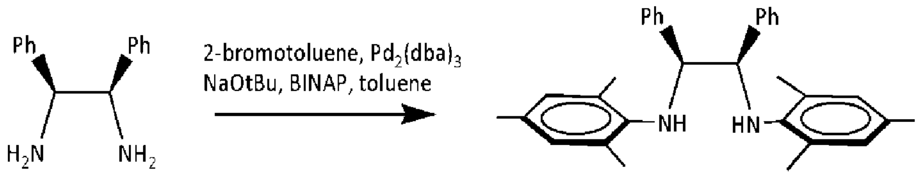


**S**

<u>**Second step**</u>

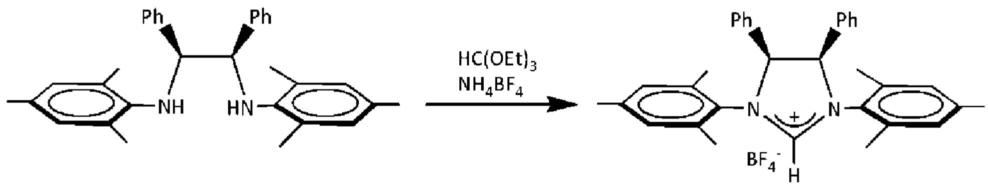


**S**

<u>**Third step**</u>

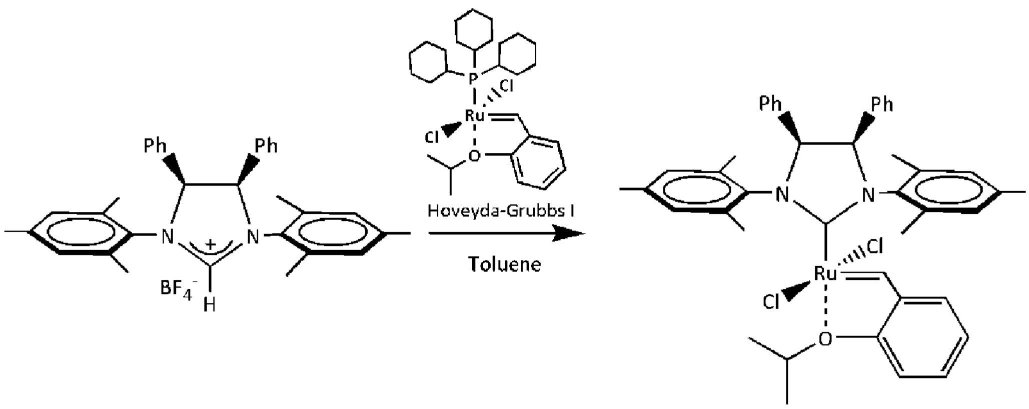


In general, all the reactions of the above-captioned steps involving metal complexes were performed under nitrogen atmosphere using standard Schlenk or glovebox techniques. All the reagents were purchased from Sigma-Aldrich Company and were of reagent grade quality. These products were used without any further purification. Solvents were dried and distilled before use. Deuterated solvents were degassed under an $N_2$ flow and stored over activated 4 Å molecular sieves. Flash column chromatography of organic compounds was performed using silica gel 60 (230-400 mesh), and flash column chromatography of ruthenium compounds was performed using silica gel 60 (230-400 mesh) from TSI Scientific (Cambridge, MA). Analytical thin-layer chromatography (TLC) was performed using silica gel 60 F254 pre-coated plates (0.25 mm thickness) with a fluorescent indicator. Visualization of TLC plates was performed by UV light and $KMnO_4$ or $I_2$ stains.

NMR spectra were recorded on a Bruker AVANCE 400 spectrometer (400 MHz for $^1H$; 100 MHz for $^{13}C$). The $^1H$ and $^{13}C$ NMR chemical shifts are referenced to $Me_4Si$ ($\delta$= 0 ppm) using the residual portion impurities of the deuterated solvents as internal standard. Spectra are reported as follows: chemical shift (ppm), multiplicity, integration and coupling constant (Hz). Multiplicities are abbreviate d as follows: singlet (s), doublet (d), triplet (t), quartet (q), multiplet (m), and broad (br).

<u>First step</u>

Under nitrogen atmosphere, tris(dibenzylideneacetone)dipalladium(0) ($Pd_2(dba)_3$) (0.11 g, 0.12 mmol), 2,2'-bis(diphenylphosphino)-1,1'-binaphthyl (BINAP) (0.18 g, 0.29 mmol), sodium tert-butoxide (NaOtBu) (0.71 g, 7.39 mmol) and toluene (8 ml) were introduced in a flask equipped with a reflux condenser and stirred for 20 min. After this time, meso-1,2-diphenylethylenediamine (0.52 g, 2.46 mmol) and 2-bromotoluene (0.74 ml, 4.93 mmol) were added and the solution was heated to 105 °C for 16 hours. The reaction mixture was then cooled at room temperature, diluted with hexane and filtered through a plug of silica gel. The product was eluted from silica gel with methylene chloride. The solvent was removed under vacuum to give the product as a pale yellow solid S1 (0.88 g, 1.96 mol, 79%).

The NMR spectra of S1 solid are respectively:

$^1$H NMR (400 MHz, $CD_2Cl_2$): δ 7.19 (m, 6H), 6.84 (m, 4H), 6.78 (s, 4H), 4.96 (d, 2H), 4.35 (d, 2H), 2.13 (s, 6H), 2.09 (s, 12H) (see figure 1); and
$^{13}$C NMR (100 MHz, $CD_2Cl_2$): δ 142.2, 140.4, 130.4, 129.8, 128.4, 127.7, 126.8, 66.1, 20.6, 20.0 (see figure 2).

Second step

Triethyl orthoformate (0.89 ml, 5.36 mmol), diamine (0.31 g, 0.68 mmol) and ammonium tetrafluoroborate (0.09 g, 0.87 mmol) were introduced in a 10 ml round-bottom flask equipped with a magnetic stirrer. The reaction mixture was heated at 120°C for 4 h. After cooling to room temperature, the product was precipitated and washed with $Et_2O$ (3 × 10 ml) And hexane. The solid obtained was dissolved in the minimum amount of $CH_2Cl_2$ and then filtered. The solvent was removed under vacuum. The product was dissolved in the minimum amount of ethanol and recovered by precipitation as a light brown solid S2 (0.22 g, 0.41 mmol, 60%).

The NMR spectra of S2 solid are respectively:

$^1$H NMR (300 MHz, $CDCl_3$): δ 8.52 (s, 1H), 7.29 (m, 6H), 7.16 (m, 4H), 6.89 (s, 4H), 6.63 (s, 2H), 2.52 (s, 12H), 2.21 (s, 6H) (see figure 3); and
$^{13}$C NMR (100 MHz, $CD_2Cl_2$): δ 160.5, 141.1, 131.5, 130.0, 129.4, 129.1, 72.0, 21.2, 19.8 (see figure 4).

Third step

In a glove box, a solution of S2 (0.160 g, 0.29 mmol), potassium bis(trimethylsilyl)amide (KHMDS) (0.064 g, 0.32 mmol) in 15 ml of toluene was stirred at room temperature for five minutes. $(PCy_3)Ru(=CH\text{-}o\text{-}OiPrC_6H_4)Cl_2$ (0.092 g, 0.15 mmol) was then added, the reaction flask was removed from the glove box and heated at 70 °C for 1.5 hours. The mixture was allowed to cool at room temperature and the crude product was purified by flash column chromatography on silica gel TSI (n-hexane/$Et_2O$ = 5:1 to 3:1). The solvent was removed under vacuum to give catalyst $HG2_{Ph\text{-}Mes}$ as a green powder (0.081 mmol, 63.1 mg, 54%).

The NMR spectra of HG2Ph-Mes are respectively:
1H NMR (400 MHz, $CDCl_3$): δ 16.33 (s, 1H), 7.53-6.99 (m, 18H), 5.89 (d, 1H), 5.72 (d, 1H), 4.89 (q, 1H), 2.59-2.21 (18H), 1.30 (d, 3H), 1.21 (d, 3H). (see figure 5); and $^{13}$C NMR (100 MHz, $CD_2Cl_2$): δ 298.5, 219.3, 152.0, 145.1, 139.0, 129.9, 128.2, 127.6, 122.4, 122.3, 113.0, 75.2, 74.2, 73.2, 29.7, 22.8, 22.0, 20.6, 20.5, 20.2, 19.7 (see figure 6).

Evaluation of the catalytic activity

The catalyst activity was evaluated trough the Ring Opening Metathesis Polymerization (ROMP) of 5-ethylidene-2-norbornene (ENB). The polymerization was carried out in solution of tetrahydrofuran (THF). For the test, a molar ratio between catalyst and reactive monomer of 1:3000 was used. In experiment, 2.9 mg of initiator were mixed with and stirred in 1.33 g of monomer and 99 ml THF in a round bottom flask. The reaction was stopped by adding a few drops of ethyl-vinyl ether and the obtained polymer was coagulated in methanol. The polymer was filtered and washed with $CH_2Cl_2$. The following scheme shows the polymerization of 5-ethylidene-2-norbornene (ENB) by ROMP reaction:

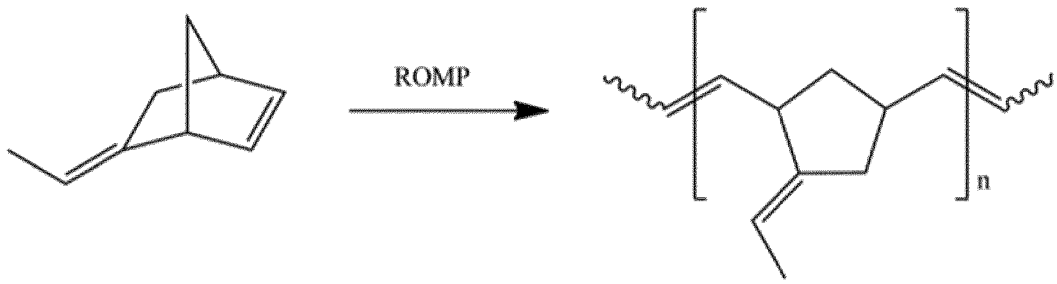

The catalyst of the invention showed good activity giving high conversions for short times, which are indicated in Table 1 which follows and indicates the amount of monomer, catalyst and polymer (metathesis product) and conversion degree.

Table I

| **Run 1** | **Monomer g** | **Catalyst mg** | **Time sec** | **Polymer g** | **Conversion %** |
|---|---|---|---|---|---|
| **$HG2_{Ph-Mes}$** | 1,33 | 2,9 | 59 | 1,08 | 81 |

Control of the catalyst thermal stability

The thermolytic stability of the catalyst was evaluated in nitrogen atmosphere. Thermal stability of new catalyst $HG2_{Ph-Mes}$ has been verified by introducing 2.9 mg of ruthenium compound in a vial. This was placed in an oil bath at 180 °C for 2 hours. Then the solid was dissolved into 0.5 ml of $CDCl_3$ and analyzed by $^1$H NMR. $^1$H NMR analysis was carried out for monitoring and estimating the catalyst stability. In the spectra of catalyst, the presence of the characteristic resonance signal of the benzylidene carbene proton can be considered for directly assaying the degradation state of the catalyst. $^1$H-NMR spectra of new $HG2_{Ph-Mes}$ catalyst reveals, at room temperature, the signal of Ru=CH- 16.33 ppm. It is interesting to note that, $HG2_{Ph-Mes}$ catalyst shows exceptional stability after a thermal treatment at 180 °C for 2 hours in nitrogen atmosphere, confirmed by the $^1$H NMR spectrum showing all signals unchanged.

The same treated sample was used for a test polymerization in solution of THF to evaluate the activity.

After heat treatment the catalyst activity is only slightly diminished from 81 to 76% as shown in the following Table II indicates also the amount of monomer, catalyst and polymer (metathesis product) and conversion degree at 180 °C.

Table II

| **Run 2** | **Monomer g** | **Catalyst mg** | **Time sec** | **Polymer g** | **Conversion %** |
|---|---|---|---|---|---|
| **$HG2_{Ph-Mes}$ 180 °C 2h** | 1.34 | 2.9 | 58 | 1.02 | 76 |

Control of $HG2_{Ph-Mes}$ in the presence of oxirane rings

In order to evaluate catalyst stability with epoxy groups, present in elevated concentration in the resin, $HG2_{Ph-Mes}$ was solubilized in cyclohexene oxide. The reactivity of this monomer with the catalyst was analyzed at different compositions (1/1 and 1/150) and temperature (80, 100,110,120, 130 and 140 °C) by means of $^1$H NMR. 140 °C is the maximum operating temperature for the NMR spectrometer used.

Figure 7 illustrates $^1$H NMR spectra of $HG2_{Ph-Mes}$ and cyclohexene oxide in a molar ratio 1/1 and 1/150 treated at 140 °C for 35 minutes, on samples dissolved in 1,1,2,2-tetrachloroethane-$d_2$ (TCDE).

Spectra show all the signals characteristics of $HG2_{Ph-Mes}$ and cyclohexene oxide, highlighting that no reaction takes place between these two compounds and indicating that no thermal decomposition occurs.

A very similar investigation was performed using the catalyst solubilized in the form of molecular complex inside two different epoxy mixtures based on conventional aeronautical epoxy precursors (EB2A based on the bi-functional epoxy precursor EPON 828 and TBD based on the tetra-functional epoxy precursor TGMDA). The thermal stability was evaluated in this hostile environment up to 180 °C by means of FT/IR investigation.

The following experiments prove that the catalyst in the form of molecular complex (solubilized in the epoxy formulation) is active in the epoxy formulations at high temperatures (up to 180 °C).

The thermal stability of the catalyst of the invention was also evaluated by means of ther-mogravimetric analysis. The catalyst shows a temperature of initial degradation in air of 210 °C, as illustrated by figure 8 showing the thermogravimetric analysis (TGA) curve obtained in a dry air atmosphere in the temperature range of 0-1000 °C. A similar result was obtained in nitrogen atmosphere.

The catalyst of the invention has proven to be active in the ROMP reactions within epoxy mixtures also after curing cycles of the resin up to 200 °C for 1 hour.

Experimental

- Epoxy mixture (EB2A)

The epoxy matrix composite was prepared by mixing an epoxy precursor (Bisphenol A diglycidyl ether, trade

name EPON 828 - acronym E) with a reactive diluent (1,4-Butanediol-diglycidylether - Acronym B) at a concentration of 80%: 20% (by wt.) epoxide to flexibilizer giving the EB2 sample. This reactive diluent has proven to be effective to reduce the viscosity of epoxy precursors, allowing to improve handling and ease of processing and to optimize consequently performance properties. The compounds E and B, both containing epoxy-moieties, were obtained by Sigma-Aldrich. The curing agent investigated for this study was an anionic initiator Phenol, 2,4,6- tris[(dimethylamino) methyl] (Trade name Ankamine K54 - acronym A). The curing agent Ancamine K54 was added at a concentration of 10% (by wt.) with respect to the mixture EB2 giving the sample EB2A.

The following scheme shows the chemical structures of compounds used for the mixture EB2A:

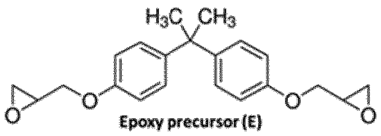

Epoxy precursor (E)

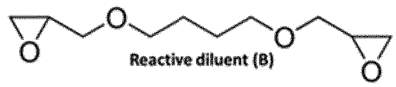

Reactive diluent (B)

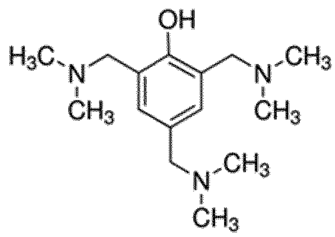

Curing agent (A)

- <u>HG2$_{Ph-Mes}$ catalyst based epoxy mixture</u>

HG2$_{Ph-Mes}$ catalyst based epoxy mixture was obtained by solubilizing HG2$_{Ph-Mes}$ catalyst in the epoxy matrix EB2A at the molecular level. In particular, the epoxy specimen EB2A+0.5% HG2$_{Ph-Mes}$ was prepared by solubilizing the HG2$_{Ph-Mes}$ catalyst at a concentration of 0.5% (by wt.) with respect to the mixture EB2, by mechanical agitation in the liquid epoxy mixture EB2 at the temperature of 90°C and kept at this temperature for 1 h using an oil bath. The transparent mixture containing the completely dissolved catalyst was then taken out of the oil bath and left to cool to a temperature of 50°C, and then the curing agent Ancamine K54 was added to it.

The thus obtained mixture was cured in a two-stage process. The first stage was carried out at a temperature of 80°C for 3 h, while the second stage was carried out according to three variants, i.e. at the three different temperatures of 130°C, 160°C and 180°C for 1h respectively.

In all three cases, between the first and the second stages, three intermediate stages were always provided, each of which envisaged a holding time of 15 minutes at each of the temperatures of 90°C, 100°C and 110°C.

The cured specimen is in the shape of a circular disk with a transparent mixture containing the completely dissolved catalyst.

<u>Evaluation of catalytic activity by FTIR analysis</u>

Infrared spectroscopy provides a useful way to identify metathesis products and therefore catalyst activity.

Accordingly, infrared spectroscopic investigation was carried out in order to check complete dispersion and dissolution of the catalyst, and the constancy of the catalytic activity thereof.

Infrared spectra were obtained at room temperature by using a Bruker Vertex 70 FTIR-spectrophotometer with a 2 $cm^{-1}$ resolution (64 scans collected).

<u>Results and discussion</u>

<u>- Evaluation of the catalytic activity inside the liquid epoxy mixture</u>

In the development of the self-healing epoxy resins, the evaluation of the catalytic activity was firstly investigated

for the epoxy matrix without microcapsules.

The epoxy mixture was EB2. The catalyst $HG2_{Ph-Mes}$ was solubilized by mechanical agitation in the liquid epoxy mixture (EB2) composed of epoxy precursor (E) and reactive diluent (B). This mixture was filled with a low percentage of $HG2_{Ph-Mes}$ (0.5% by weight) with respect to the epoxy mixture EB2.

The catalyst was embedded into the epoxy mixture EB2 at the temperature of 90°C and kept at this temperature for 1 h using an oil bath until complete solubilisation. To verify the catalytic activity of this catalyst, spectroscopic investigation was carried out. For this purpose, the mixture containing catalyst $HG2_{Ph-Mes}$ was stratified on a slide for light microscopy. Subsequently, two drops of 5-ethylidene-2-norbornene (ENB) were added to the stratified mixtures. The control of the catalytic activity was performed by evaluating the formation of the metathesis product. For the catalyst $HG2_{Ph-Mes}$ active in the Ring opening Metathesis polymerization (ROMP) of ENB a thin solid film of metathesis product was obtained immediately.

Figure 9 illustrates the FTIR spectrum of the solid film (metathesis product) obtained by polymerization of ENB with $HG2_{Ph-Mes}$ (0.5 wt.%) solubilized in the EB2 mixture at 90°C. Such FTIR spectrum shows a peak at 966 $cm^{-1}$, which is an indication of the formation of the metathesis product and hence of the fact that the activity of the catalyst was not compromised by the chemical nature of the oligomers, by the temperature and by the treatments of mechanical mixing. The highlighted peak at 966 $cm^{-1}$ is attributable to ring-opened poly(ENB). This peak is assigned to the trans substituted alkenes, characteristic of the ring opened cross-linked product [poly(ENB)] providing evidence that the embedded catalyst is active.

- Evaluation of the self-healing activity in the solid epoxy samples

Similar results were also obtained for all the samples EB2A+0.5% $HG2_{Ph-Mes}$ cured up to 110°C, 130°C, 160°C and 180°C confirming the thermal stability and chemical inertness towards the epoxy groups of the $HG2_{Ph-Mes}$ catalyst which is solubilized at the molecular level.

Figures 10 to 13 show FTIR spectra of the metathesis products of the cured material after the intermediate stages, and the second stage carried out at the four temperatures stated above, respectively, to which ENB was then added in the same way as was done after the preliminary step of dissolution of the catalyst.

The samples EB2A+0.5% $HG2_{Ph-Mes}$ cured up to 110°C, 130°C, 160°C and 180°C were cut by a serrated blade; the powder which was produced from the samples was collected in a mortar and a drop of healing agent (5-ethylidene-2-norbornene - ENB) was added before dispersing the sample powder into the KBr disks for FTIR investigation.

The presence in all cases of the peak at 966 $cm^{-1}$, indicating formation of the metathesis product, proves that the catalytic activity of the $HG2_{Ph-Mes}$ catalyst within the epoxy matrix remained unchanged after the treatments described. It can be seen that, after the treatment at 110°C, the mixture can be cured up to 180°C for 1 h (see Fig. 13) without compromising the catalytic activity of the catalyst.

From the FTIR spectra, it can also be observed that even with a low percentage of catalyst (0.5% by wt.), $HG2_{Ph-Mes}$ shows thermal stability and chemical inertness towards the epoxy groups.

Microcapsule manufacture

Complete self-healing formulations were manufactured using the formulations EB2A and TBD with microcapsules embedded in the resins. Microcapsules containing as healing agent a blend of two olefins 5-ethylidene-2-norbornene (ENB) and dicyclopentadiene (DCPD), with the outer shell composed of poly(ureaformaldehyde) and the inner shell of ethylene maleic anhydride (EMA) copolymer, were prepared by in situ polymerization in an oil in water emulsion in accord with conventional procedures. DCPD was added to ENB with the aim of increasing the cross-linked fraction of the metathesis products. The composition of the healing agent inside the microcapsules is ENB(95%)/DCPD(5%). The synthesized microcapsules show a particular morphological feature, which is illustrated by figure 14 showing FESEM images of the microcapsules in the form of spherical snarls which consist of tubular nanovessels.

Self-Healing Efficiency Assessed by Fracture test

- Preparation of the self-healing epoxy composite

Self-healing epoxy composite, based on microencapsulated healing agents within the bulk polymer, was obtained by dispersing ENB(95%)/DCPD(5%)-filled microcapsules (cap ED) at a concentration of 18 % (by wt.) with respect to the mixture EB2 into the epoxy mixture EB2+0.5% $HG2_{Ph-Mes}$. The mixture containing the microcapsules was then taken out of the oil bath and left to cool to a temperature of 50°C, and then the curing agent Ancamine K54 was added to it, thus obtaining self-healing epoxy sample EB2A+0.5% HG2Ph-Mes +18% cap ED.

The self-healing epoxy mixture was cured in a two-stage curing cycle: the first isothermal stage was carried

out at a temperature of 125°C for 1 h and a second isothermal stage was carried out at higher temperatures up to 180°C for 2 h.

The healing efficiency $\eta$ of the sample EB2A+0.5% HG2Ph-Mes cured up to 180°C was evaluated by fracture tests.

For quasi-static fracture conditions crack healing efficiency $\eta$ is defined as the ability of a healed sample to recover fracture toughness and is defined by the following equation:

$$\eta = \frac{K_{IChealed}}{K_{ICvirgin}} \quad (1)$$

where $K_{ICvirgin}$ is the fracture toughness of the virgin specimen and $K_{ICheled}$ is the fracture toughness of the healed specimen. Using a protocol already established in literature, healing efficiency is measured by carefully controlled fracture experiments for both the virgin and the healed sample. These tests utilize a TDCB geometry, illustrated in figure 15, which ensures controlled crack growth along the centerline of the specimen and provides a crack length independent measure of the fracture toughness.

Healing evaluation begins with a virgin fracture test of an undamaged TDCB sample. A pre-crack is introduced to sharpen the crack-tip. The sample is then mounted on a load frame and loaded under displacement control causing the pre-crack to propagate along the centerline of the sample until failure.

The crack is then closed and allowed to heal at room temperature with no external intervention. After healing, the sample is loaded again until failure. With this geometry, the efficiency measurement simply requires knowledge of the critical fracture load, Pc, of virgin and healed specimen according to the following equation:

$$\eta = \frac{P_{Chealed}}{P_{Cvirgin}} \quad (2)$$

Equation 2 can be derived from equation 1 by considering that KIC = $\alpha$PC, where $\alpha$=11.2$\times$103 $m^{-3/2}$ for the TDCB used geometry. This procedure has been recognized to be very effective to measure the healing efficiency.

Values of healing efficiency ($\eta$) were calculated using equation 2. Figure 16 shows the Load-Displacement curves of the virgin sample, the healed sample after the first cycle, and the healed sample after the second cycle for the self-healing sample EB2A+0.5% $HG2_{Ph-Mes}$ cured up to 180°C. It is worth noting that the percentage of the catalyst solubilized in the epoxy matrix in the form of molecular complex is very low, only 0.5 wt. %.

Two different cycles were carried out. After the first closure of the crack, the sample was kept at rest for 24 hours and a first cycle was performed after the healing of the sample; the healing efficiency was found to be 103%. This auto-repaired sample was stressed again and kept at rest for 3 hours (second cycle). It showed a healing efficiency of 94%.

In conclusion, the thermal stability and chemical inertness towards the epoxy groups, allows the use of the catalyst dissolved in the resin in the form of molecular complex and the curing of the resin at the temperatures required by aeronautical industries. This enables a considerable saving on the amount of catalyst to be used in the production of composite materials for the aeronautics with self-healing capacity.

The following examples illustrate the results obtained on the activation of self-healing mechanisms in epoxy formulations solidified using aromatic primary amines and also containing the catalyst of the invention.

Experimental

- Epoxy mixture

An epoxy matrix composite was prepared by mixing the tetrafunctional epoxy precursor, tetraglycidyl methylene dianiline (TGMDA - acronym T) (epoxy equivalent weight 117-133 g/eq), with an epoxy reactive monomer 1-4 butanedioldiglycidyl ether (BDE - acronym B) at a concentration of 80%: 20% (by wt.) epoxide to flexibilizer giving the TB sample. The curing agent used for this study is 4,4-diaminodiphenyl sulfone (DDS - acronym D).

The epoxy mixture was obtained by mixing TGMDA with BDE monomer at a concentration of 80%:20% (by wt.) epoxide to flexibilizer. This reactive diluent has proven to be effective to reduce the viscosity of epoxy precursors allowing to improve handling and ease of processing and to optimize consequently performance properties [see Guadagno L, Raimondo M, Lafdi K, Fierro A, Rosolia S, Nobile MR. Influence of nanofiller morphology on the viscoelastic

properties of CNF/epoxy resins, AIP Conf Proc 2014;1599:386-9; and Nobile MR, Raimondo M, Lafdi K, Fierro A, Rosolia S, Guadagno L. Relationships between nanofiller morphology and viscoelastic properties in CNF/ Epoxy resins. Polym Compos 2015;36:1152-60http://dx.doi.org/10.1002/pc.23362]. The compounds T and B, both containing epoxy-moieties, were obtained by Sigma-Aldrich. The curing agent DDS was added at stoichiometric amount with respect to the epoxy rings (TGMDA and BDE) giving the sample TBD. A not-stoichiometric amount of hardener does not change the final results illustrated below.

The following scheme illustrates the chemical structures of compounds used for the mixture TBD.

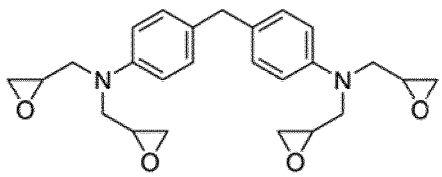

Epoxy precursor (T)

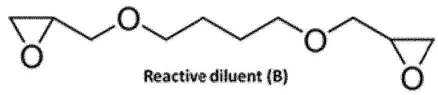

Reactive diluent (B)

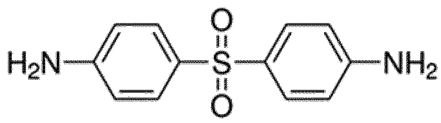

Curing agent (D)

- HG2$_{Ph-Mes}$ catalyst based epoxy mixture

HG2$_{Ph-Mes}$ catalyst based epoxy mixture was obtained by solubilizing HG2$_{Ph-Mes}$ catalyst in the epoxy matrix TBD at the molecular level (in the form of molecular complex). In particular, the epoxy specimen TBD+0.5% HG2$_{Ph-Mes}$ was prepared by solubilizing the HG2$_{Ph-Mes}$ catalyst at a concentration of 0.5% (by wt.) with respect to the mixture TB, by mechanical agitation in the liquid epoxy mixture TB at the temperature of 120°C and kept at this temperature for 1 h using an oil bath. Then the curing agent DDS was added to the transparent mixture containing the completely dissolved catalyst. At this point the epoxy hardener DDS was mechanically stirred in this mixture using an oil bath at 120°C for 1 h until the complete solubilization of the hardener was obtained.

The final mixture thus obtained was cured in a two-stage process. The first stage was carried out at a temperature of 80°C for 3 h, while the second stage was carried out at higher temperature up to 180°C for 1 h.

Between the first and the second stages, three intermediate stages were always provided, each of which envisaged a holding time of 15 minutes at each of the temperatures of 90°C, 100°C and 110°C.

- Self-healing epoxy systems

Self-healing epoxy systems, based on microencapsulated healing agents within the bulk polymer, were obtained by dispersing ENB(95%)/DCPD(5%)-filled microcapsules (cap ED) at a concentration of 16 % (by wt.) with respect to the mixture TB into the epoxy mixture TB+0.5% HG2$_{Ph-Mes}$ (formulation 1) and finally adding the hardener agent DDS, thus obtaining self-healing epoxy sample TBD+0.5% HG2$_{Ph-Mes}$ +16% cap ED. The self-healing epoxy mixture was cured in a two-stage process. The first stage was carried out at a temperature of 80°C for 3 h, while the second stage was carried out at higher temperatures up to 180°C for 3 h and then further at 200°C for 1 h.

Between the first and the second stages, three intermediate stages were always provided, each of which envisaged a holding time of 15 minutes at each of the temperatures of 90°C, 100°C and 110°C.

In order to ascertain complete dispersion and dissolution of the catalyst, and its catalytic activity, infrared spectroscopic investigation was carried out as previously described, with infrared spectra obtained at room temperature by using a Bruker Vertex 70 FTIR-spectrophotometer with a 2 cm$^{-1}$ resolution (64 scans collected).

The catalytic activity was then evaluated for Formulation 1, as well as for Formulation 2 and Formulation 3 which are disclosed below.

Formulation 1

The test carried out in the initial liquid epoxy mixture with formulation 1 highlights that no equimolecular reaction between epoxy rings and catalyst complex occurs.

In the development of the self-healing epoxy resins, the evaluation of the catalytic activity was investigated for the epoxy matrix without microcapsules and hardener agent.

The tetra-functional based epoxy mixture was TB (only epoxy precursor and reactive diluent). The catalyst $HG2_{Ph-Mes}$ was solubilized by mechanical agitation in the liquid epoxy mixture (TB) composed of epoxy precursor (T) and reactive diluent (B). This mixture was filled with a low percentage of $HG2_{Ph-Mes}$ (0.5% by weight) with respect to the epoxy mixture TB.

The catalyst was embedded into the epoxy mixture TB at the temperature of 120°C and kept at this temperature for 1 h using an oil bath until complete solubilization. To verify the catalytic activity of this catalyst, spectroscopic investigation was carried out. For this purpose, the mixture containing catalyst $HG2_{Ph-Mes}$ was stratified on a slide for light microscopy. Subsequently, two drops of 5-ethylidene-2-norbornene (ENB) were added to the stratified mixture. The control of the catalytic activity was performed by evaluating the formation of the metathesis product. For the catalyst $HG2_{Ph-Mes}$ active in the Ring opening Metathesis polymerization (ROMP) of ENB a thin solid film of metathesis product was obtained immediately.

Figure 17 illustrates the FTIR spectrum of the solid film (metathesis product) obtained by polymerization of ENB with $HG2_{Ph-Mes}$ (0.5 wt. %) solubilized in the TB mixture at 120°C. Such spectrum shows a peak at 966 $cm^{-1}$, which is indicative of the formation of the metathesis product and hence of the fact that the activity of the catalyst was not compromised by the chemical nature of the oligomers, by the temperature and by the treatments of mechanical mixing. The highlighted peak at 966 $cm^{-1}$ is attributable to ring-opened poly(ENB). This peak is assigned to the trans substituted alkenes, characteristic of the ring opened crosslinked product [poly(ENB)] providing evidence that the embedded catalyst is active.

Formulation 2

Formulation 2 substantially corresponds to Formulation 1, except for the liquid epoxy mixture of TBD type, i.e. containing the curing agent DDS absent in Formulation 1.

The test performed on formulation 2 highlights that the catalyst of the invention is active in the solid sample solidified using DDS, requiring high temperature (up to 180°C) for the curing process.

Figure 18 illustrates the FTIR spectrum of the solid film (metathesis product) obtained by polymerization of ENB with $HG2_{Ph-Mes}$ (0.5 wt.%) solubilized in the TBD mixture cured up to 180°C for 1 h.

The sample TBD+0.5% $HG2_{Ph-Mes}$ cured up to 180°C for 1 h was cut by a serrated blade; the powder which was produced from the sample was collected in a mortar and a drop of healing agent (5-ethylidene-2-norbornene - ENB) was added before dispersing the sample powder into the KBr disks for FTIR investigation.

The presence of the peak at 966 $cm^{-1}$, indicating formation of the metathesis product, proves that the catalytic activity of the $HG2_{Ph-Mes}$ catalyst within the epoxy matrix remained unchanged after the treatments described for formulation 2.

Figure 19 comparatively illustrates the FTIR spectra of the solid film (metathesis product) obtained by polymerization of ENB with HG2Ph-Mes (0.5 wt%) solubilized in the TBD mixture cured up to 180°C for 1 h and of the epoxy mixture TBD cured up to 180°C for 1 h. The absence of the metathesis peak at 966 $cm^{-1}$, characteristic of the ring opened crosslinked product [poly(ENB)], can be observed for the cured sample TBD.

Formulation 3

Formulation 3 substantially corresponds to Formulation 2, except for the presence in the cured sample solidified using DDS of 16 wt. % of vessels filled with the healing agent, namely vessels in the form of microcapsules containing a blend of ENB/DCPD).

Figure 20 illustrates the FTIR spectra of the metathesis product of the self-healing epoxy resin cured up to 180°C for 3 h. The metathesis peak at 966 $cm^{-1}$ can be observed also in this case. This very important result indicates that the catalytic activity of $HG2_{Ph-Mes}$ is preserved in the epoxy resin even in the presence of microcapsules for high temperatures up to 180°C for 3 h.

The cure degree calculated by thermal analysis of the sample of formulation 3 (TBD+0.5% $HG2_{Ph-Mes}$ +16% cap ED cured up to 180°C for 3 h) is 94% as that of aeronautical resins.

The FT/IR spectrum of this sample shows the absence of the two weak absorption bands (N-H stretching vibrations) - (one at 3471 $cm^{-1}$ and the other near 3373 $cm^{-1}$). These bands represent, respectively, the "free" asymmetrical and symmetrical N-H stretching modes. The absence of these signals proves that the sample is almost completely cured

as also evidenced by thermal analysis.

The catalyst of the invention proved its activity also inside an epoxy formulation hardened up to 200 °C.

It shall be apparent that, applying the principles of the invention, the implementation details and the embodiments may be widely varied relative to what has been described by way of example only, within the scope defined by the following claims.

## Claims

1. Metathesis catalyst having the formula

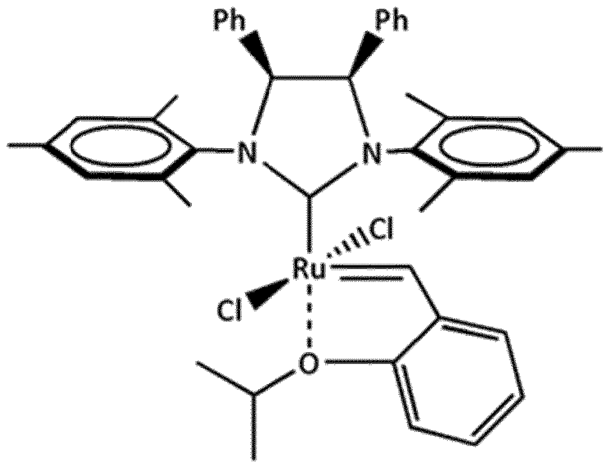

(I).

2. Use of the catalyst of claim 1 to activate metathesis reactions.

3. Use according to claim 2 to activate self-healing reactions of olefins stored in micro- or nano-vessels, in a thermosetting or thermoplastic resin, or in carbon fiber reinforced panels.

4. Use according to claim 3, wherein said microvessels are microcapsules.

5. Use of the catalyst of claim 1 for the synthesis of petrochemicals, the polymerization of cyclic olefins, hydrogen transfer reactions, the preparation of macromolecular materials and of injection-mouldable thermoset resins.

6. Use according to claim 2 for the synthesis in situ of polymers inside a matrix of a thermosetting resin, in order to improve the mechanical performance of said matrix.

7. Use according to claim 2 in the metathesis of olefins or olefin blends in combination with the use of aromatic primary amines as hardeners of a thermoset resin.

8. Use according to claim 2 in the metathesis of olefins or olefin blends in combination with the use of aliphatic amines or a mixture of aliphatic and aromatic amines, as hardeners of a thermoset resin.

9. Use according to claim 7 or 8, wherein said olefins are ENB and/or DCPD.

10. Use according to claim 2, the catalyst being in a thermosetting resin subjected to a curing cycle in the presence of a hardener, the weight ratio between the catalyst and the epoxy resin being preferably in the range 0.05 to 3 wt. %.

11. Use of claim 10, wherein the curing cycle is conducted at temperatures in the range 100 to 180°C, or in the range 120 to 180°C.

12. Use according to claim 2, the catalyst being dispersed in form of molecular complex in olefins and/or low molecular weight polyolefins in the temperature range 25 to 180°C.

**13.** Use according to claim 2, the catalyst being dispersed in form of molecular complex in fluid epoxy mixtures containing reactive epoxy rings at a temperature in the range 25 to 180°C.

**14.** Use according to claim 3, 6, 7, 8 or 10, wherein said thermosetting and thermoset resins are epoxy resins.

**15.** Use according to claim 7 or 8, wherein said amines are DDS.

**Patentansprüche**

**1.** Metathesekatalysator mit der Formel

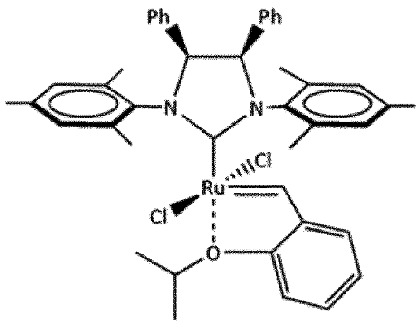

(I).

**2.** Verwendung des Katalysators nach Anspruch 1 zum Aktivieren von Metathesereaktionen.

**3.** Verwendung nach Anspruch 2 zum Aktivieren selbstheilender Reaktionen von Olefinen, die in Mikro- oder Nanogefäßen gespeichert sind, in einem duroplastischen oder thermoplastischen Harz, oder in kohlefaserverstärkten Platten.

**4.** Verwendung nach Anspruch 3, bei der besagte Mikrogefäße Mikrokapseln sind.

**5.** Verwendung des Katalysators nach Anspruch 1 für die Synthese von Petrochemikalien, die Polymerisation zyklischer Olefine, Wasserstofftransferreaktionen, die Vorbereitung makromolekularer Materialien und spritzgießbarer Duroplastharze.

**6.** Verwendung nach Anspruch 2 für die lokale Synthese von Polymeren innerhalb einer Matrix eines duroplastischen Harzes zum Verbessern der mechanischen Leistungsfähigkeit besagter Matrix.

**7.** Verwendung nach Anspruch 2 bei der Metathese von Olefinen oder Olefinmischungen in Kombination mit der Verwendung aromatischer primärer Amine als Härter eines Duroplastharzes.

**8.** Verwendung nach Anspruch 2 bei der Metathese von Olefinen oder Olefinmischungen in Kombination mit der Verwendung aliphatischer Amine oder einer Mischung aliphatischer und aromatischer Amine als Härter eines Duroplastharzes.

**9.** Verwendung nach Anspruch 7 oder 8, bei der besagte Olefine ENB und/oder DCPD sind.

**10.** Verwendung nach Anspruch 2, bei der der Katalysator in einem duroplastischen Harz ist, das einem Aushärtungszyklus in der Gegenwart eines Härters unterzogen wird, bei der das Gewichtsverhältnis zwischen dem Katalysator und dem Epoxidharz vorzugsweise in dem Bereich 0,05 bis 3 Gewichts% ist.

**11.** Verwendung nach Anspruch 10, bei der der Aushärtungszyklus bei Temperaturen in dem Bereich 100 bis 180°C oder in dem Bereich 120 bis 180°C durchgeführt wird.

**12.** Verwendung nach Anspruch 2, bei der der Katalysator in Ausgestaltung eines molekularen Komplexes in Olefinen

und/oder Polyolefinen mit geringem Molekulargewicht in dem Temperaturbereich 25 bis 180°C dispergiert wird.

**13.** Verwendung nach Anspruch 2, bei der der Katalysator in Ausgestaltung eines molekularen Komplexes in flüssigen Epoxidmischungen, die reaktive Epoxidringe enthalten, bei einer Temperatur in dem Bereich 25 bis 180°C dispergiert wird.

**14.** Verwendung nach Anspruch 3, 6, 7, 8 oder 10, bei der besagte duroplastische und Duroplastharze Epoxidharze sind.

**15.** Verwendung nach Anspruch 7 oder 8, bei der besagte Amine DDS sind.

**Revendications**

**1.** Catalyseur de métathèse ayant la formule

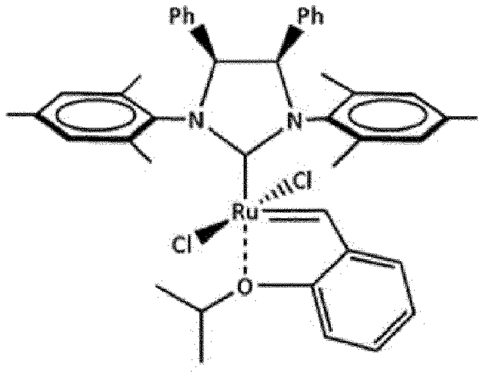

(I).

**2.** Utilisation du catalyseur selon la revendication 1 pour activer des réactions de métathèse.

**3.** Utilisation selon la revendication 2 pour activer des réactions d'auto-cicatrisation d'oléfines stockées dans des micro- ou nano-récipients, dans une résine thermodurcissable ou thermoplastique, ou dans des panneaux renforcés par des fibres de carbone.

**4.** Utilisation selon la revendication 3, dans laquelle lesdits microrécipients sont des microcapsules.

**5.** Utilisation du catalyseur selon la revendication 1 pour la synthèse de produits pétrochimiques, la polymérisation d'oléfines cycliques, des réactions de transfert d'hydrogène, la préparation de matériaux macromoléculaires et de résines thermodurcies moulables par injection.

**6.** Utilisation selon la revendication 2 pour la synthèse in situ de polymères à l'intérieur d'une matrice d'une résine thermodurcissable, afin d'améliorer la performance mécanique de ladite matrice.

**7.** Utilisation selon la revendication 2 dans la métathèse d'oléfines ou de mélanges d'oléfines en combinaison avec l'utilisation d'aminés primaires aromatiques en tant que durcisseurs d'une résine thermodurcie.

**8.** Utilisation selon la revendication 2 dans la métathèse d'oléfines ou de mélanges d'oléfines en combinaison avec l'utilisation d'aminés aliphatiques ou d'un mélange d'aminés aliphatiques et aromatiques, en tant que durcisseurs d'une résine thermodurcie.

**9.** Utilisation selon la revendication 7 ou 8, dans laquelle lesdites oléfines sont de l'ENB et/ou du DCPD.

**10.** Utilisation selon la revendication 2, le catalyseur étant dans une résine thermodurcissable soumise à un cycle de durcissement en présence d'un durcisseur, le rapport pondéral entre le catalyseur et la résine époxy étant de préférence dans la plage de 0,05 à 3 % en poids.

**11.** Utilisation selon la revendication 10, dans laquelle le cycle de durcissement est effectué à des températures dans la plage de 100 à 180 °C, ou dans la plage de 120 à 180 °C.

**12.** Utilisation selon la revendication 2, le catalyseur étant dispersé sous forme de complexe moléculaire dans des oléfines et/ou des polyoléfines de faible poids moléculaire dans la plage de température allant de 25 à 180 °C.

**13.** Utilisation selon la revendication 2, le catalyseur étant dispersé sous forme de complexe moléculaire dans des mélanges d'époxy fluides contenant des noyaux époxy réactifs à une température dans la plage de 25 à 180 °C.

**14.** Utilisation selon la revendication 3, 6, 7, 8 ou 10, dans laquelle lesdites résines thermodurcissables et thermodurcies sont des résines époxy.

**15.** Utilisation selon la revendication 7 ou 8, dans laquelle lesdites amines sont des DDS.

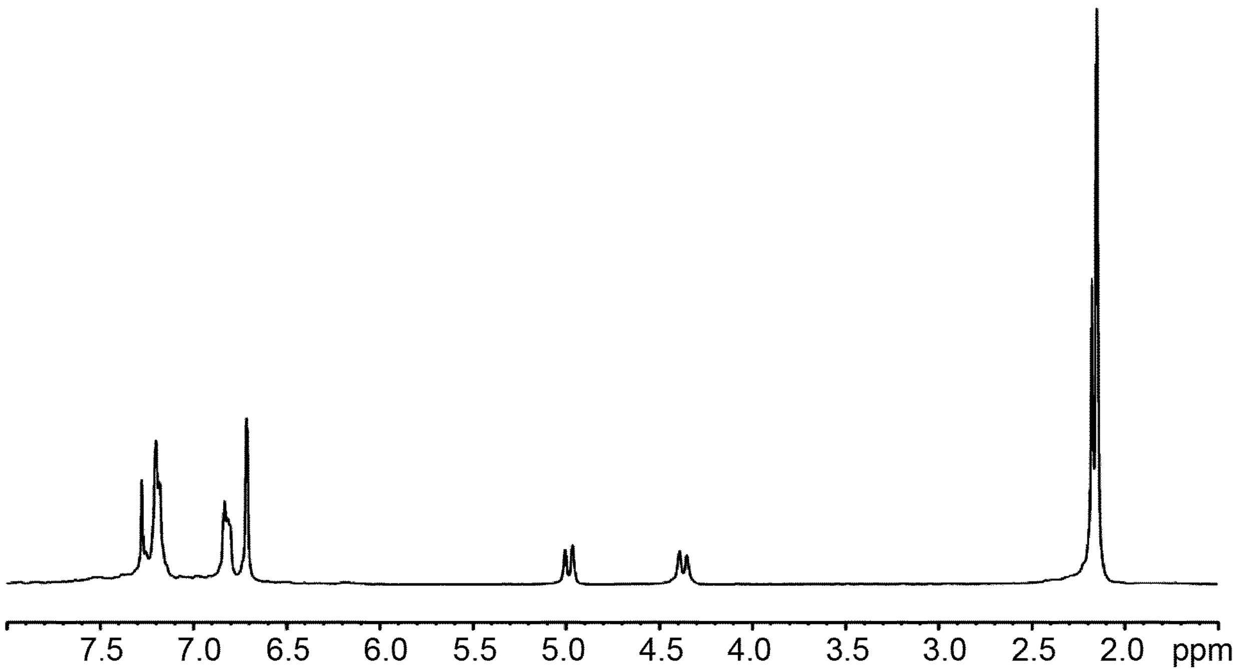
7.5
7.0
6.5
6.0
5.5
5.0
4.5
4.0
3.5
3.0
2.5
2.0
ppm

FIG. 1

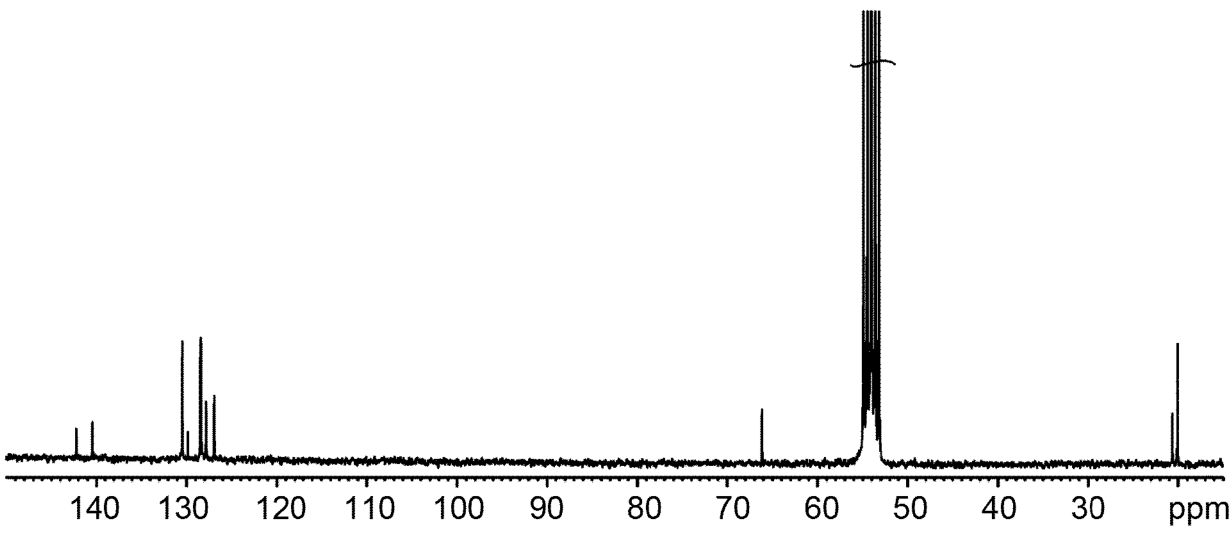
140
130
120
110
100
90
80
70
60
50
40
30
ppm

FIG. 2

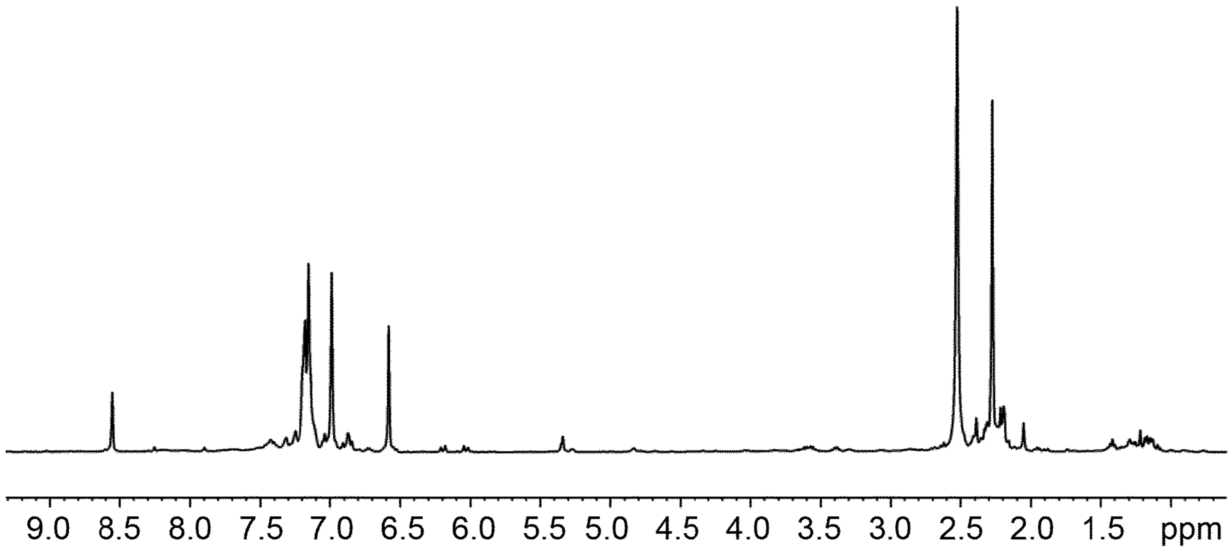
9.0 8.5 8.0 7.5 7.0 6.5 6.0 5.5 5.0 4.5 4.0 3.5 3.0 2.5 2.0 1.5 ppm

FIG. 3

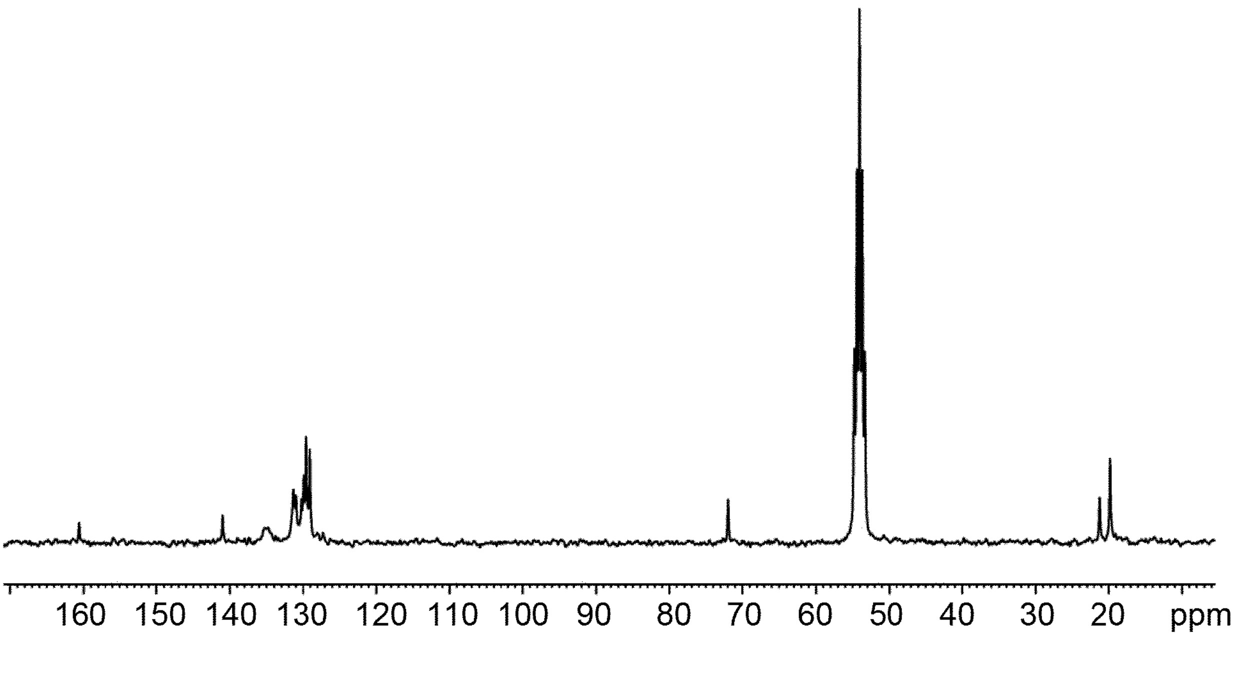
160 150 140 130 120 110 100 90 80 70 60 50 40 30 20 ppm

FIG. 4

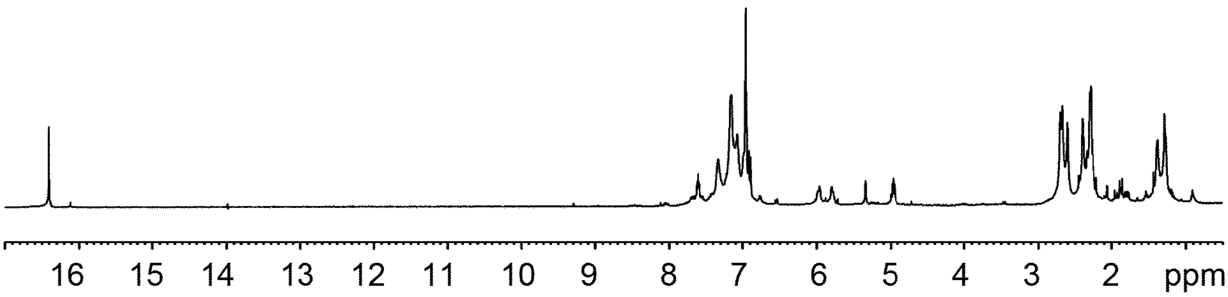
16
15
14
13
12
11
10
9
8
7
6
5
4
3
2
ppm

FIG. 5

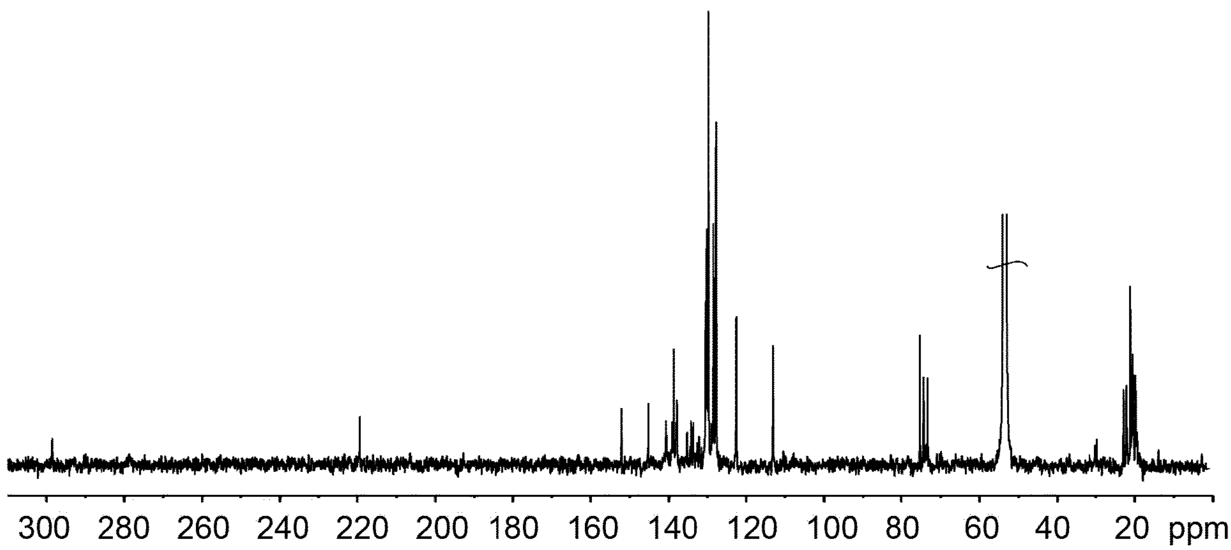
300
280
260
240
220
200
180
160
140
120
100
80
60
40
20
ppm

FIG. 6

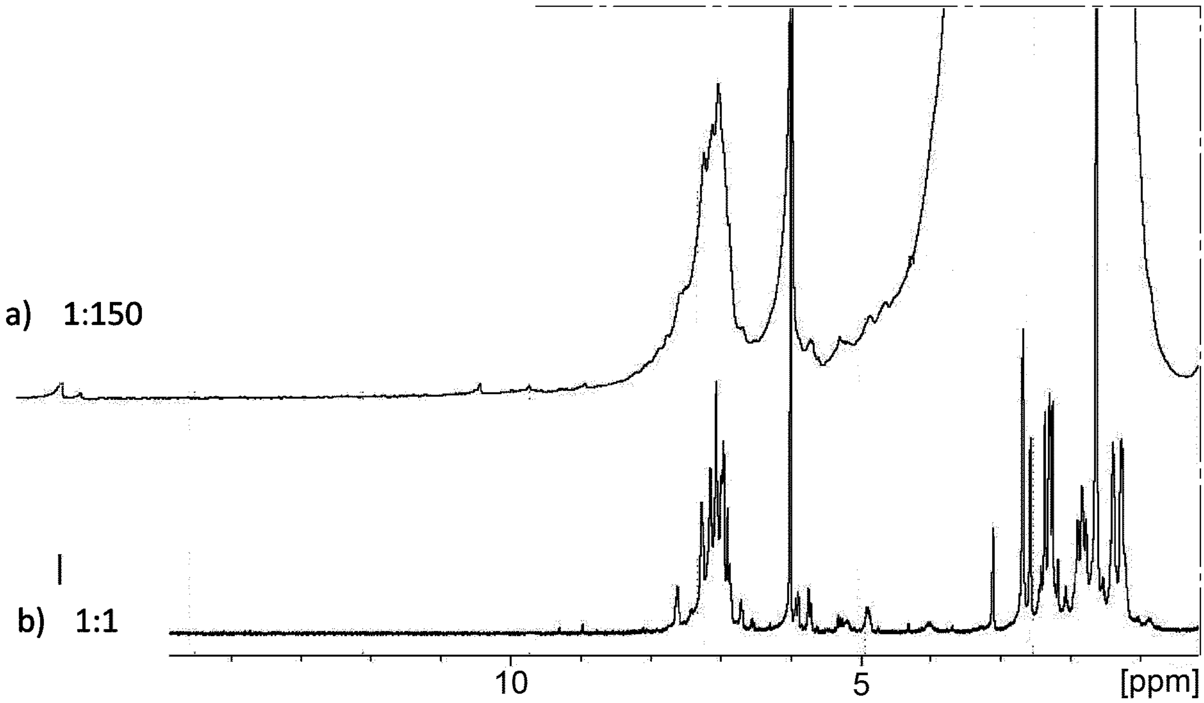
a) 1:150
b) 1:1
10
5
[ppm]

FIG. 7

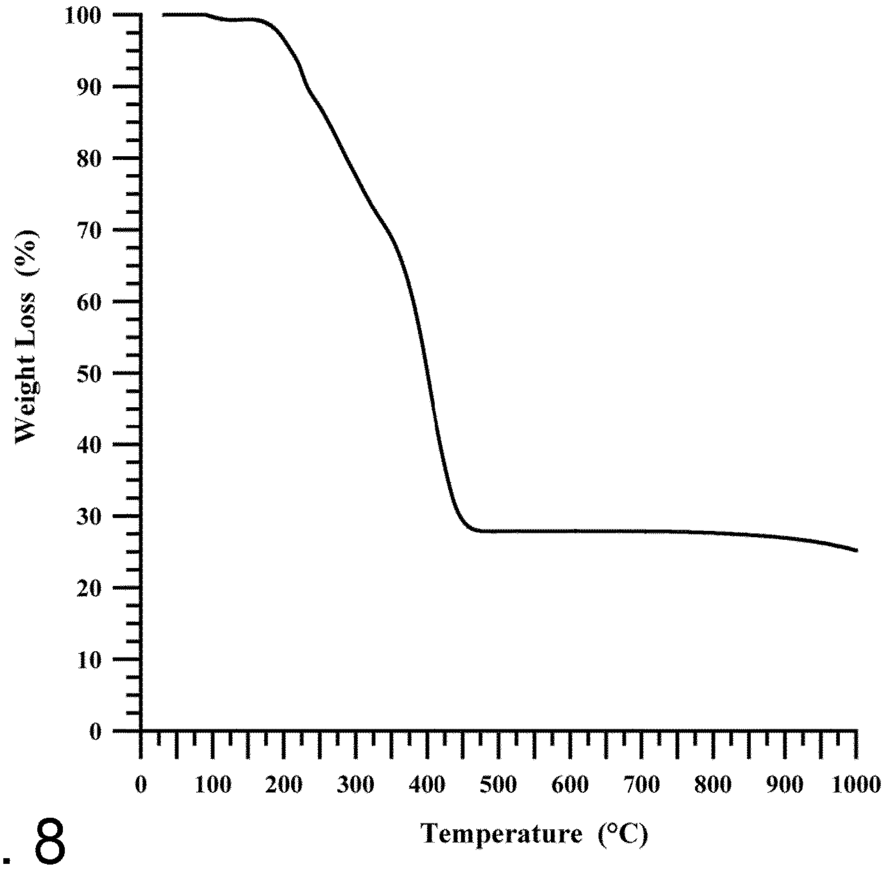
Weight Loss (%)
Temperature (°C)
0
10
20
30
40
50
60
70
80
90
100
0
100
200
300
400
500
600
700
800
900
1000

FIG. 8

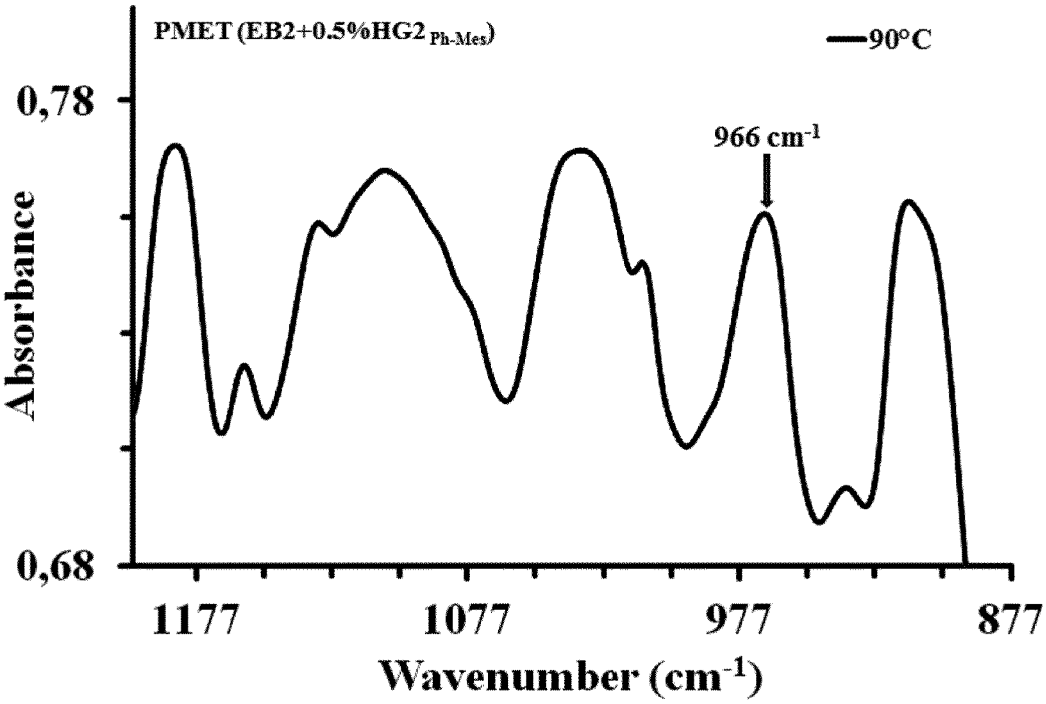
PMET (EB2+0.5%HG2 Ph-Mes)
90°C
966 cm-1
0,78
0,68
Absorbance
1177
1077
977
877
Wavenumber (cm-1)

FIG. 9

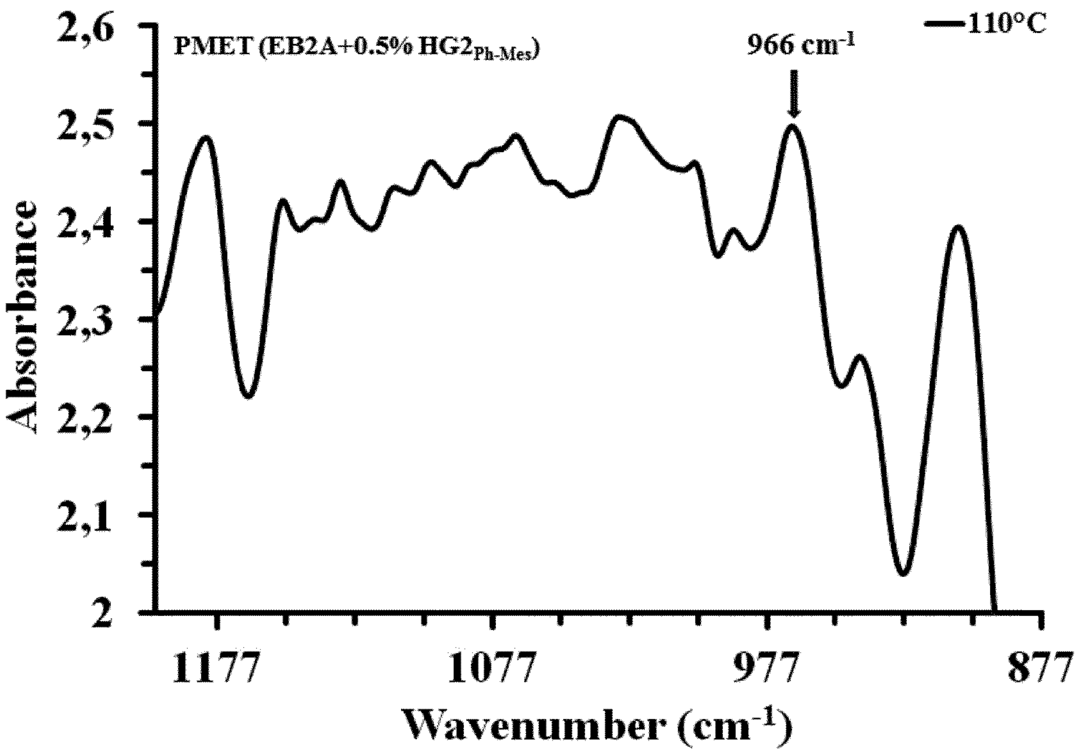
PMET (EB2A+0.5% HG2Ph-Mes)
110°C
966 cm-1
2,6
2,5
2,4
2,3
2,2
2,1
2
Absorbance
1177
1077
977
877
Wavenumber (cm-1)

FIG. 10

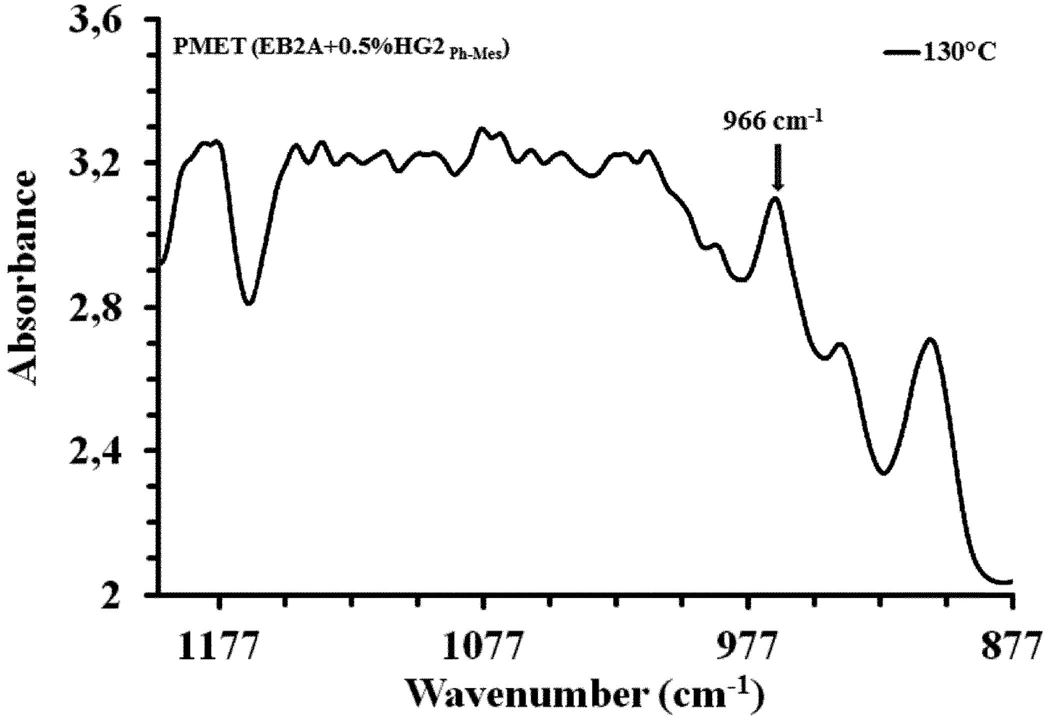
3,6
3,2
2,8
2,4
2
Absorbance
PMET (EB2A+0.5%HG2 Ph-Mes)
130°C
966 cm-1
1177
1077
977
877
Wavenumber (cm-1)

FIG. 11

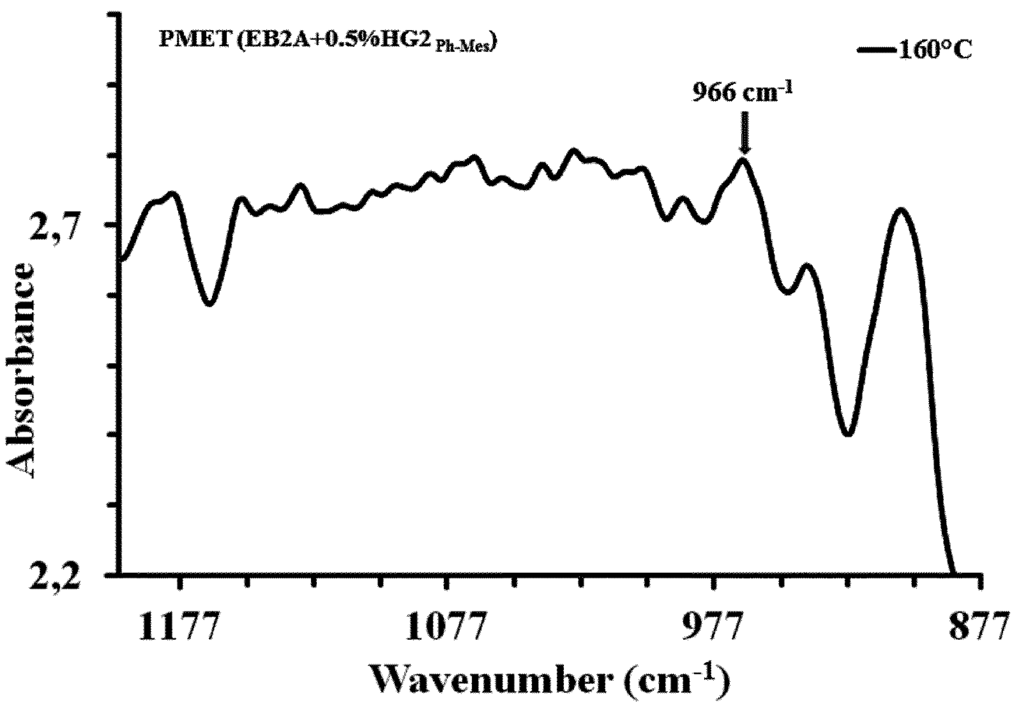
2,7
2,2
Absorbance
PMET (EB2A+0.5%HG2 Ph-Mes)
160°C
966 cm-1
1177
1077
977
877
Wavenumber (cm-1)

FIG. 12

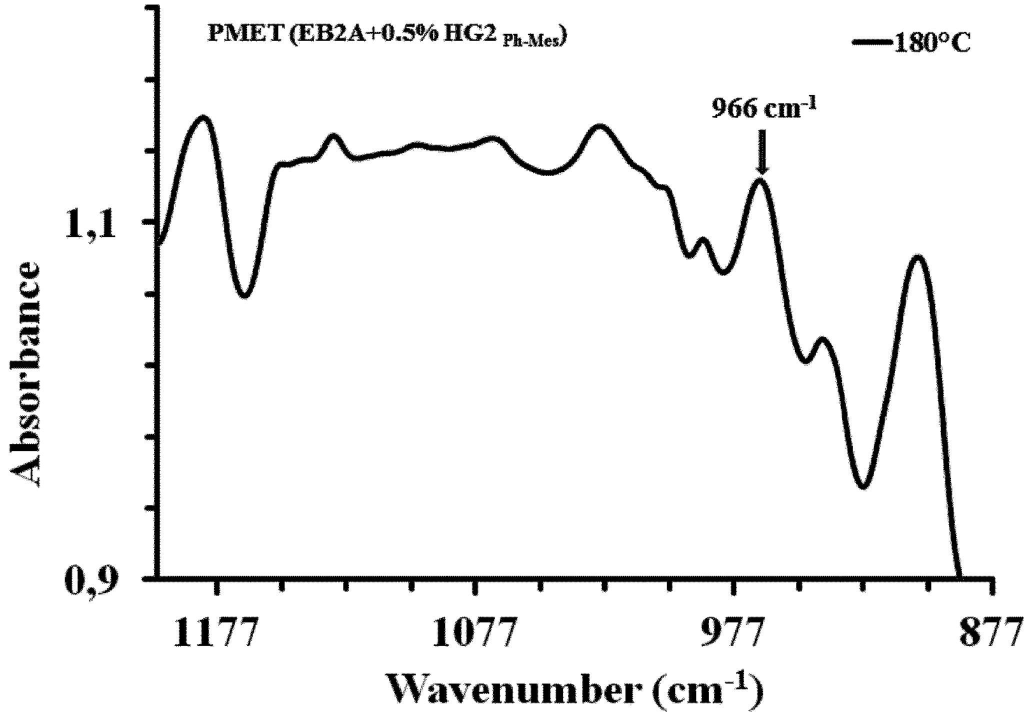
PMET (EB2A+0.5% HG2 Ph-Mes)
—180°C
966 cm-1
1,1
0,9
Absorbance
1177
1077
977
877
Wavenumber (cm-1)

FIG. 13

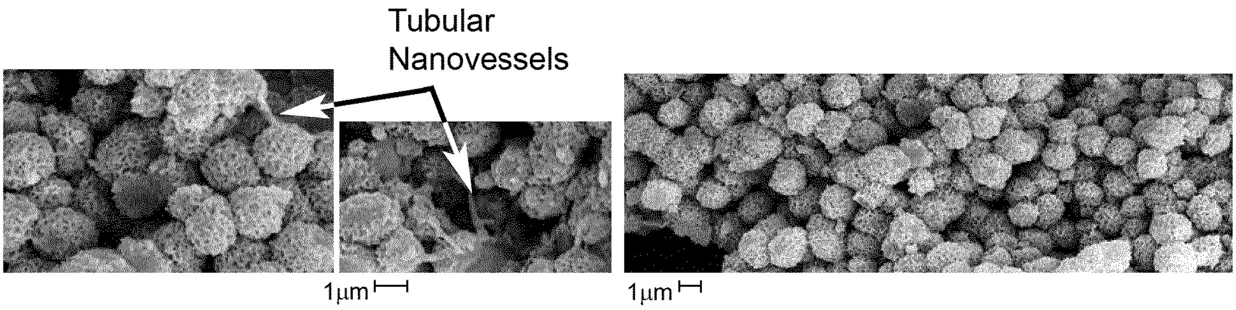
Tubular
Nanovessels
1μm
1μm

FIG. 14

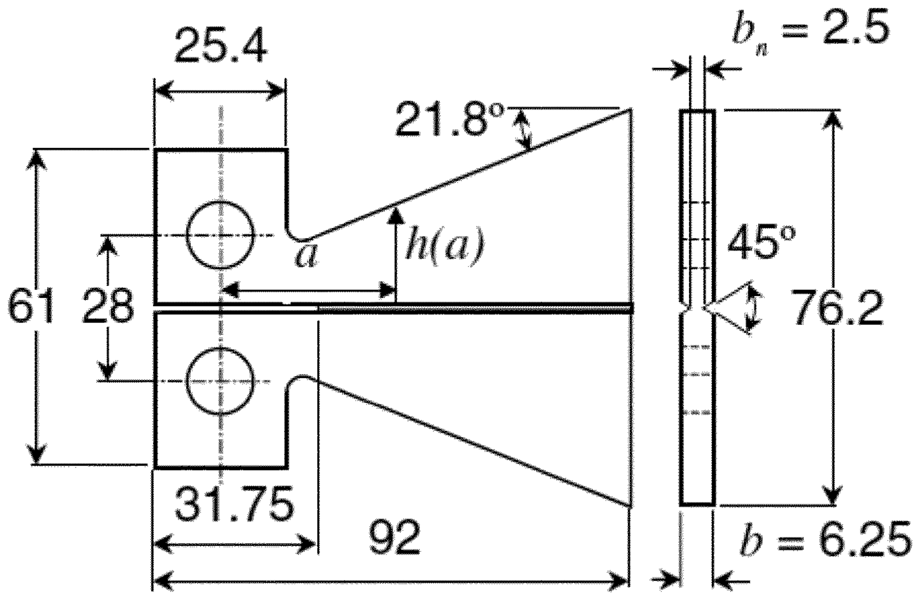
25.4
21.8°
$b_n$ = 2.5
h(a)
a
45°
61
28
76.2
31.75
92
b = 6.25

FIG. 15

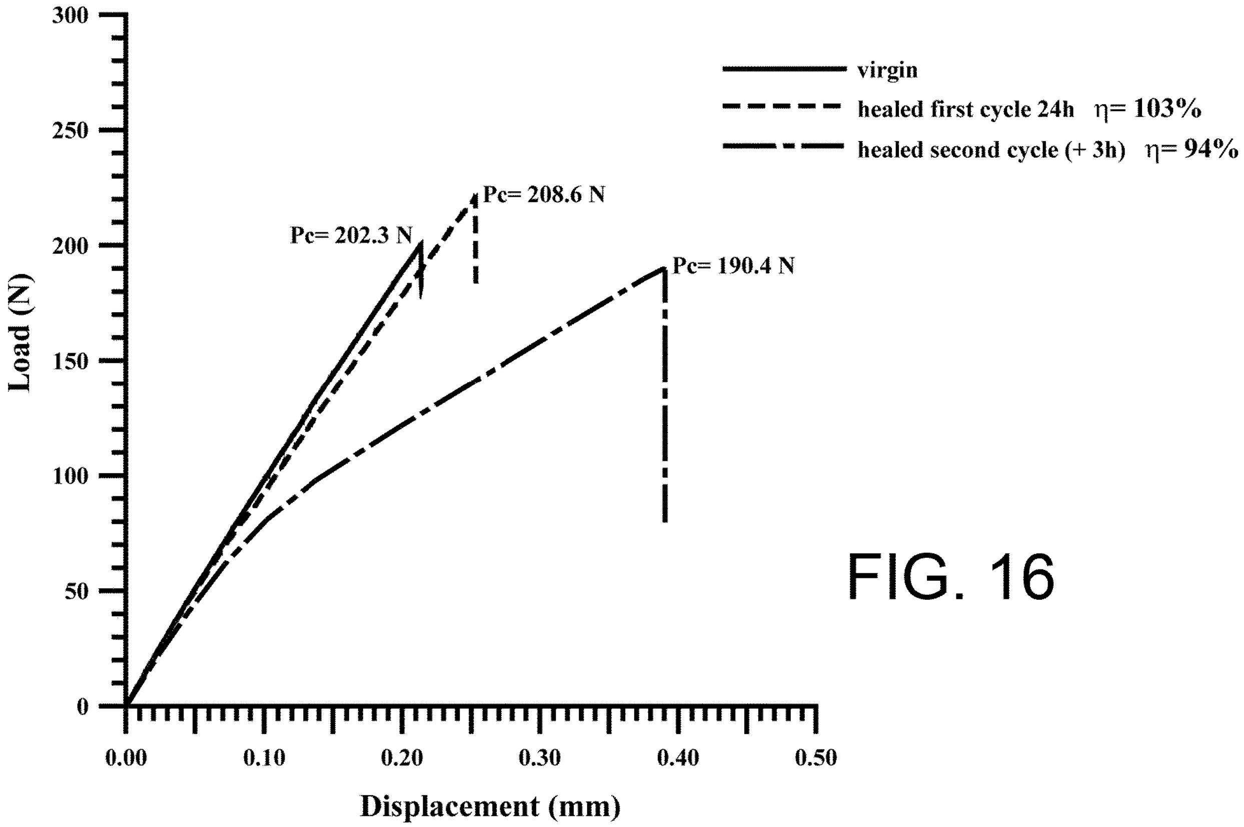
virgin
healed first cycle 24h η= 103%
healed second cycle (+ 3h) η= 94%
Pc= 202.3 N
Pc= 208.6 N
Pc= 190.4 N
Load (N)
Displacement (mm)
0
50
100
150
200
250
300
0.00
0.10
0.20
0.30
0.40
0.50

FIG. 16

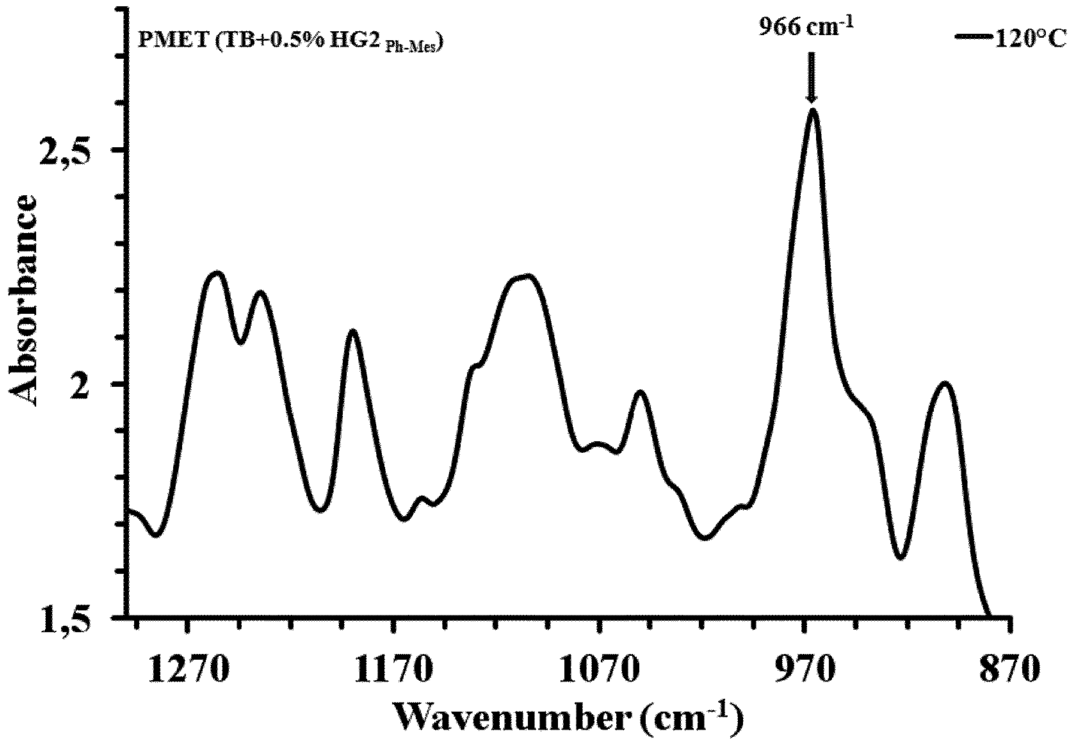
PMET (TB+0.5% HG2 Ph-Mes)
966 cm-1
120°C
2,5
2
1,5
Absorbance
1270
1170
1070
970
870
Wavenumber (cm-1)

FIG. 17

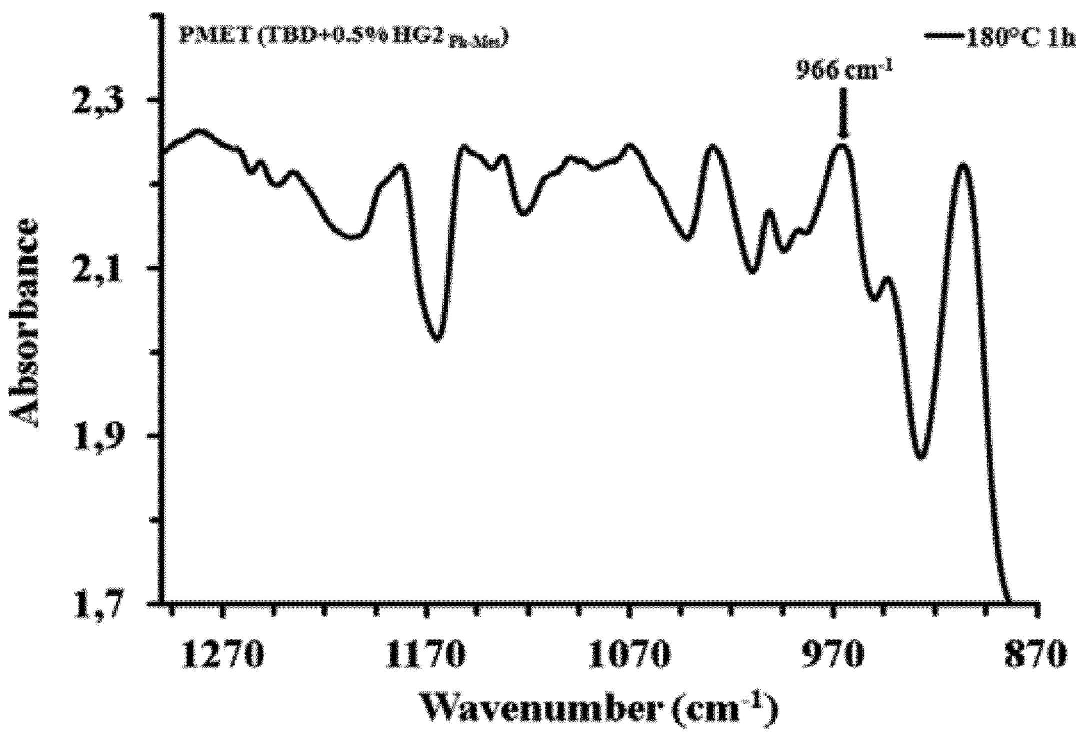
PMET (TBD+0.5% HG2 Ph-Mes)
180°C 1h
966 cm-1
2,3
2,1
1,9
1,7
Absorbance
1270
1170
1070
970
870
Wavenumber (cm-1)

FIG. 18

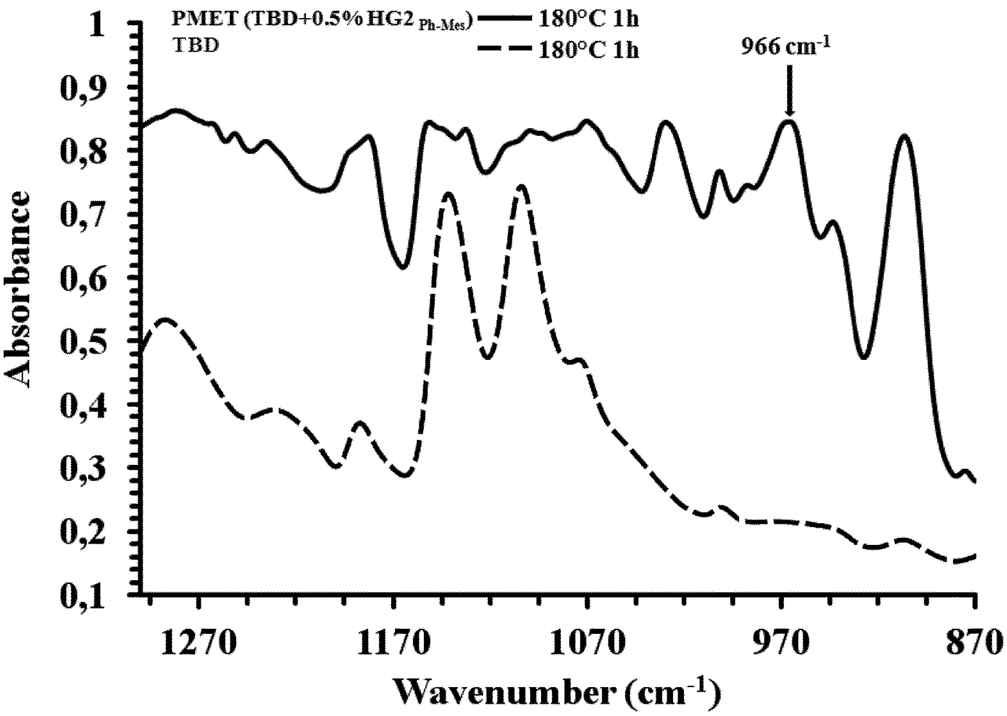

PMET (TBD+0.5% HG2 Ph-Mes) 180°C 1h
TBD 180°C 1h
966 cm-1
1
0,9
0,8
0,7
0,6
0,5
0,4
0,3
0,2
0,1
Absorbance
1270
1170
1070
970
870
Wavenumber (cm-1)


FIG. 19

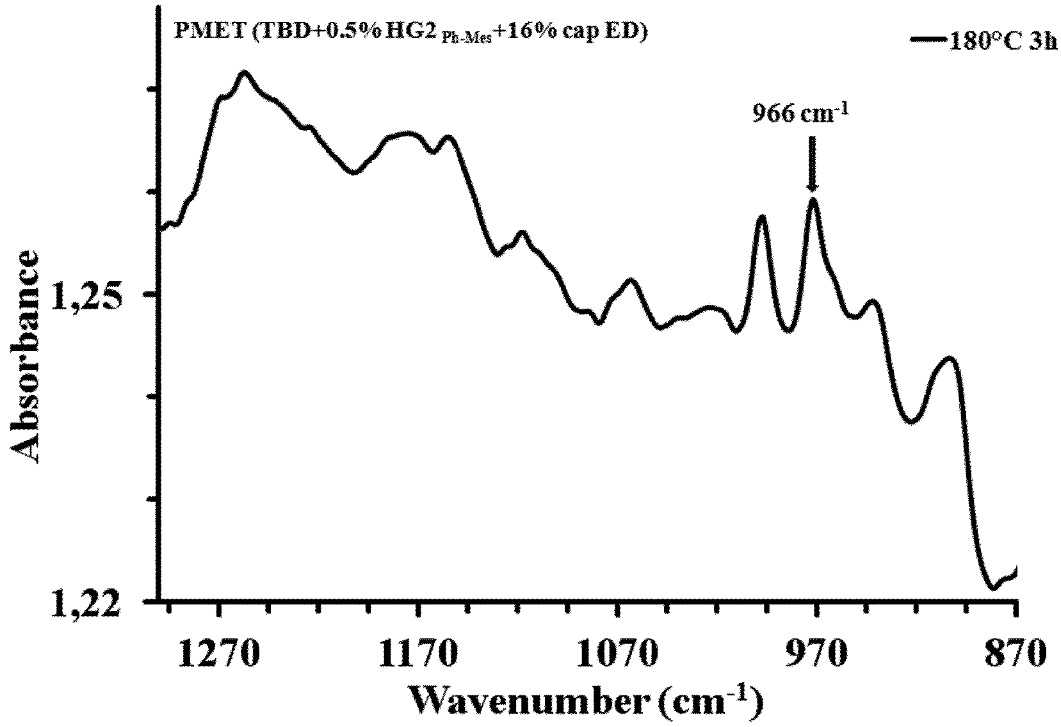

PMET (TBD+0.5% HG2 Ph-Mes+16% cap ED)
180°C 3h
966 cm-1
1,25
1,22
Absorbance
1270
1170
1070
970
870
Wavenumber (cm-1)


FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014120321 A1
- WO 2004007608 A1
- EP 2027919 A2
- EP 2873682 A1
- WO 2009113025 A1
- EP 2172518 A1


### Non-patent literature cited in the description


- **S. T. NGUYEN ; L. K. JOHNSON ; R. H. GRUBBS ; J. W. ZILLER.** *J. Am. Chem. Soc.,* 1992, vol. 114, 3974-3975
- **S. T. NGUYEN ; R. H. GRUBBS ; J. W. ZILLER.** *J. Am. Chem. Soc.,* 1993, vol. 115, 9858-9859
- **P. SCHWAB ; R. H. GRUBBS ; J. W. ZILLER.** *J. Am. Chem. Soc.,* 1996, vol. 118, 100-110
- **T. WESKAMP ; W. C. SCHATTENMANN ; M. SPIEGLER ; W. A. HERMANN.** *Angew. Chem.,* 1998, vol. 110, 2631-2633
- *Angew. Chem. Int. Ed.,* 1998, vol. 37, 2490-2493
- **M. SCHOLL ; S. DING ; C. W. LEE ; R. H. GRUBBS.** *Org. Lett.,* 1999, vol. 1, 953-956
- **T. WESKAMP ; F. J. KOHL ; W. HIERINGER ; D. GLEICH ; W. A. HERMANN.** *Angew. Chem.,* 1999, vol. 111, 2573-2576
- *Angew. Chem. Int. Ed.,* 1999, vol. 38, 2416-2419
- **J. HUANG ; E. D. STEVENS ; S. P. NOLAN ; J. L. PETERSON.** *J. Am. Chem. Soc.,* 1999, vol. 121, 2674-2678
- **S. B. GARBER ; J. S. KINGSBURY ; B. L. GRAY ; A. H. HOVEYDA.** *J. Am. Chem. Soc.,* 2000, vol. 122, 8168-8179
- **S. GESSLER ; S. RANDL ; S. BLECHERT.** *Tetrahedron Lett,* 2000, vol. 41, 9973-9976
- **P. H. DESHMUKH ; S. BLECHERT.** *Dalton Trans,* 2007, 2479-2491
- **Y. SCHRODI ; R. L. PEDERSON.** *Aldrichimica Acta,* 2007, vol. 40, 45-52
- **C. SAMOJLOWICZ ; M. BIENIEK ; K. GRELA.** *Chem. Rev.,* 2009, vol. 109, 3708-3742
- **G. C. VOUGIOUKALAKIS ; R. H. GRUBBS.** *Chem. Rev.,* 2010, vol. 110, 1746-1787
- **T. SAVOIE ; B. STENNE ; S. K. COLLINS.** *Adv. Synth. Catal.,* 2009, vol. 351, 1826-1832
- **L. VIEILLE-PETIT ; X. LUAN ; M. GATTI ; S. BLUMENTRITT ; A. LINDEN ; H. CLAVIER ; S. P. NOLAN ; R. DORTA.** *Chem. Com-mun.,* 2009, 3783-3785
- **S. TIEDE ; A. BERGER ; D. SCHLESIGER ; D. ROST ; A. L_HL ; S. BLECHERT.** *Angew. Chem.,* 2010, vol. 122, 4064-4067
- *Angew. Chem. Int. Ed.,* 2010, vol. 49, 3972-3975
- **B. K. KEITZ ; R. H. GRUBBS.** *Organometallics,* 2010, vol. 29, 403-408
- **L. VIEILLE-PETIT ; H. CLAVIER ; A. LINDEN ; S. BLUMENTRITT ; S. P. NOLAN ; R. DORTA.** *Organometallics,* 2010, vol. 29, 775-788
- **GUADAGNO L ; RAIMONDO M ; LAFDI K ; FIERRO A ; ROSOLIA S ; NOBILE MR.** Influence of nanofiller morphology on the viscoelastic properties of CNF/epoxy resins. *AIP Conf Proc,* 2014, vol. 1599, 386-9
- **NOBILE MR ; RAIMONDO M ; LAFDI K ; FIERRO A ; ROSOLIA S ; GUADAGNO L.** Relationships between nanofiller morphology and viscoelastic properties in CNF/ Epoxy resins. *Polym Compos,* 2015, vol. 36, 1152-60, http://dx.doi.org/10.1002/pc.23362